(19) Europäisches Patentamt / European Patent Office / Office européen des brevets

(11) **EP 4 697 792 A1**

(12) **EUROPEAN PATENT APPLICATION**
published in accordance with Art. 153(4) EPC

(43) Date of publication:
**18.02.2026 Bulletin 2026/08**

(21) Application number: **24814434.7**

(22) Date of filing: **28.05.2024**

(51) International Patent Classification (IPC):
**H04W 24/10** (2009.01) **H04W 72/04** (2023.01)

(52) Cooperative Patent Classification (CPC):
**H04W 24/02; H04W 24/08; H04W 24/10; H04W 72/04; H04W 72/044**

(86) International application number:
**PCT/CN2024/095780**

(87) International publication number:
**WO 2024/245237 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.05.2023 CN 202310643844**

(71) Applicant: **Huawei Technologies Co., Ltd.**
**Shenzhen, Guangdong 518129 (CN)**

(72) Inventors:
• **FAN, Bo**
  **Shenzhen, Guangdong 518129 (CN)**
• **LIU, Fengwei**
  **Shenzhen, Guangdong 518129 (CN)**
• **CHEN, Lei**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **BEAM MEASUREMENT METHOD AND APPARATUS**

(57)    A beam measurement method and apparatus are provided, to improve data transmission reliability and transmission performance when a terminal device communicates with a network device over a beam. The method includes: A terminal device sends first request information to a network device, receives first response information from the network device, and receives a measurement reference signal from the network device after a first time offset starting from a sending moment or a receiving moment of the first response information. The first request information is for requesting to initiate a measurement reporting procedure, and the first response information indicates that the network device agrees to initiation of a measurement reporting procedure.

```
Terminal device                                    Network device

        S801: Send first request information
        ──────────────────────────────────────────►

        S802: Send first response information
        ◄──────────────────────────────────────────

S803: Send a measurement reference signal after a first time
      offset starting from a sending moment or a receiving
          moment of the first response information
        ◄──────────────────────────────────────────
```

FIG. 8

**EP 4 697 792 A1**

**Description**

This application claims priority to Chinese Patent Application No. 202310643844.7, filed with the China National Intellectual Property Administration on May 31, 2023 and entitled "BEAM MEASUREMENT METHOD AND APPARATUS", which is incorporated herein by reference in its entirety.

**TECHNICAL FIELD**

This application relates to the field of communication technologies, and in particular, to a beam measurement method and apparatus.

**BACKGROUND**

In a communication system, a network device may communicate with a terminal device based on a beam. The network device and the terminal device may determine a transmission beam and a reception beam based on beam measurement, to implement communication over the transmission beam and the reception beam. For example, the network device and the terminal device may perform beam measurement by using a periodic measurement reporting procedure, a semi-persistent measurement reporting procedure, or an aperiodic measurement reporting procedure.

In the periodic measurement reporting procedure, the network device may send radio resource control (radio resource control, RRC) configuration information to the terminal device. After the RRC configuration information takes effect, the network device and the terminal device may perform periodic measurement reporting. In the semi-persistent measurement reporting procedure, after sending RRC configuration information to the terminal device, the network device may further send activation signaling to the terminal device, and the activation signaling triggers the network device and the terminal device to periodically perform measurement reporting. In the aperiodic measurement reporting procedure, after sending RRC configuration information to the terminal device, the network device may further send trigger signaling to the terminal device, and the trigger signaling triggers the network device and the terminal device to perform measurement reporting once.

However, whether to initiate the foregoing three measurement reporting procedures is determined by the network device. When the terminal device changes (for example, the terminal device rotates in place), a direction of a reception beam currently used by the terminal device may change, and reliability of data received over the reception beam may be reduced, causing a transmission performance loss. Therefore, when the terminal device communicates with the network device over a beam, how to improve data transmission reliability and improve transmission performance becomes a technical problem to be urgently resolved.

**SUMMARY**

This application provides a beam measurement method and apparatus, to improve data transmission reliability and transmission performance when a terminal device communicates with a network device over a beam.

According to a first aspect, a beam measurement method is provided. The method may be performed by a terminal device, or may be performed by a component of the terminal device, for example, a processor, a chip, or a chip system of the terminal device, or may be implemented by a logical module or software that can implement all or some functions of the terminal device. The method includes: A terminal device sends first request information to a network device; receives first response information from the network device; and receives a measurement reference signal from the network device after a first time offset starting from a sending moment or a receiving moment of the first response information. The first request information is for requesting to initiate a measurement reporting procedure, and the first response information indicates that the network device agrees to initiation of a measurement reporting procedure.

Based on the first aspect, the terminal device may send the first request information to the network device to actively request to initiate a measurement reporting procedure, and quickly re-determine an optimal reception beam, improving data transmission reliability. The terminal device may further determine, based on the first response information sent by the network device, that the sent first request information is responded to, that is, determine that the network device agrees to initiation of a measurement reporting procedure. The terminal device may determine, based on the first time offset, the moment of receiving the measurement reference signal, and quickly determine an optimal reception beam based on the received measurement reference signal, avoiding a transmission performance loss caused by using a non-optimal reception beam, and improving transmission performance.

In a possible implementation, the first request information includes one or more of the following: identification information of the first request information, event information, trigger state information, aperiodic reporting association information, reporting configuration information, resource configuration information, resource set information, resource information, beam information, or cell information. The event information indicates one or more of the following events:

terminal device rotating, terminal device moving, terminal device rotating and moving, terminal device rotating and not moving, terminal device moving and not rotating, beam quality deteriorating, or beam quality of a current beam being less than beam quality of a candidate beam; the beam information indicates a transmission beam used by the network device to send the measurement reference signal; and the cell information indicates a cell associated with the measurement reporting procedure.

Based on this possible implementation, the identification information of the first request information may be used to indicate the first request information. The event information may be used to enable the network device to determine an event associated with the first request information. The trigger state information, the aperiodic reporting association information, the reporting configuration information, the resource configuration information, the resource set information, or the resource information may indicate the measurement reporting procedure associated with the first request information and the terminal device requests to initiate. The beam information may indicate the transmission beam used by the network device to send the measurement reference signal. The terminal device indicates the transmission beam to the network device, so that a resource loss caused by sending the measurement reference signal by the network device over another transmission beam can be reduced, and beam measurement efficiency can be improved. The cell information may enable the network device to quickly determine the cell associated with the first request information, reducing a time loss of cell determining.

In a possible implementation, when the first response information meets a preset condition, the terminal device determines that the first response information is a response to the first request information. The preset condition includes one or a combination of the following: the first response information includes first indication information; an index of a hybrid automatic repeat request (hybrid automatic repeat request, HARQ) process indicated by the first response information is the same as an index of a HARQ process used for transmitting the first request information; a new data indicator (new data indicator, NDI) field in the first response information is in a state of toggled (toggled); a field value of a measurement trigger indication field in the first response information is not equal to 0; a trigger state indicated by a measurement trigger indication field in the first response information is the same as a trigger state indicated by the first request information; or the first response information includes second indication information. The first indication information indicates that the first response information is a response to the first request information, and the second indication information indicates trigger state information, aperiodic reporting association information, or reporting configuration information that is indicated by the first request information to which the network device responds.

Based on this possible implementation, by determining that the first response information meets the foregoing preset condition, the terminal device may determine that the first response information from the network device is a response to the first request information.

In a possible implementation, the preset condition is that the index of the HARQ process indicated by the first response information is the same as the index of the HARQ process used for transmitting the first request information.

In a possible implementation, the preset condition is that the index of the HARQ process indicated by the first response information is the same as the index of the HARQ process used for transmitting the first request information, the NDI field in the first response information is in the state of toggled, and the field value of the measurement trigger indication field in the first response information is not equal to 0.

In a possible implementation, the preset condition is that the index of the HARQ process indicated by the first response information is the same as the index of the HARQ process used for transmitting the first request information, the NDI field in the first response information is in the state of toggled, and the trigger state indicated by the measurement trigger indication field in the first response information is equal to the trigger state indicated in the first request signaling.

Based on the foregoing three possible implementations, multiple feasible solutions are provided for designing the preset condition. The terminal device may determine, based on the foregoing preset condition, that the first response information from the network device is a response to the first request information.

In a possible implementation, the second indication information is a bitmap, one bit in the bitmap corresponds to one piece of trigger state information, aperiodic reporting association information, or reporting configuration information that is indicated by the first request information, and the bit indicates whether the network device responds to the trigger state information, the aperiodic reporting association information, or the reporting configuration information associated with the bit.

Based on this possible implementation, the terminal device may determine, based on each bit of the second indication information, whether the first response information received from the network device is a response to the trigger state information, the aperiodic reporting association information, or the reporting configuration information associated with the first request information.

In a possible implementation, before the first request information is sent, RRC configuration information from the network device is received.

Based on this possible implementation, the RRC configuration information may provide measurement configuration information, and the terminal device may obtain, based on the RRC configuration information, the measurement configuration information associated with the first request information, and then receive the measurement reference signal based on the measurement configuration information, to implement beam measurement, and re-determine an optimal reception beam, improving transmission performance.

In a possible implementation, the RRC configuration information is used to configure one or more of the following: a trigger state specially used for a measurement reporting procedure initiated by a terminal device, a reporting configuration specially used for a measurement reporting procedure initiated by a terminal device, aperiodic reporting association information specially used for a measurement reporting procedure initiated by a terminal device, a resource configuration specially used for a measurement reporting procedure initiated by a terminal device, a resource set specially used for a measurement reporting procedure initiated by a terminal device, or a resource specially used for a measurement reporting procedure initiated by a terminal device.

Based on this possible implementation, the RRC configuration information configures the trigger state/reporting configuration/aperiodic reporting association information/resource configuration/resource set/resource that is specially used for the measurement reporting procedure initiated by the terminal device, to indicate that the measurement reporting procedure is one the terminal device requests to initiate, to quickly re-determine an optimal reception beam, avoiding a transmission performance loss caused by using a non-optimal reception beam, and improving high-frequency transmission performance.

In a possible implementation, the RRC configuration information further includes third indication information, and the third indication information indicates whether the terminal device is allowed to request to initiate the measurement reporting procedure.

Based on this possible implementation, the terminal device may determine, based on the third indication information from the network device, whether the terminal device can actively initiate a measurement reporting procedure. If the terminal device determines that the terminal device can actively initiate a measurement reporting procedure, the terminal device may actively request, from the network device, for initiation of a measurement reporting procedure when a direction of a reception beam changes, to perform re-adjustment for an optimal reception beam based on the measurement reporting procedure, improving communication performance.

In a possible implementation, the measurement configuration information associated with the first response information is determined from the RRC configuration information based on the first response information; and the measurement reference signal from the network device is received based on the measurement configuration information associated with the first response information.

Based on this possible implementation, the terminal device may obtain, based on the RRC configuration information, the measurement configuration information associated with the first response information, and receive the measurement reference signal based on the measurement configuration information, to perform adjustment for an optimal reception beam through beam measurement, improving transmission performance.

In a possible implementation, terminal device capability information is sent to the network device. The terminal device capability information includes one or more of the following: fourth indication information, a quantity of measurement reporting procedures that can be requested by the terminal device, a quantity of reporting configurations that can be requested by the terminal device, a quantity of trigger states that can be requested by the terminal device, a quantity of resource configurations that can be requested by the terminal device, a quantity of resource sets that can be requested by the terminal device, or a quantity of resources that can be requested by the terminal device. The fourth indication information indicates whether the terminal device supports requesting to initiate a measurement reporting procedure by the terminal device.

Based on this possible implementation, the terminal device may notify, by using the fourth indication information, the network device of whether the terminal device supports requesting to initiate a measurement reporting procedure. If the terminal device supports requesting to initiate a measurement reporting procedure, the network device may configure, for the terminal device based on the fourth indication information and by using the RRC configuration information, information such as the trigger state/reporting configuration/aperiodic reporting association information/resource configuration/resource set/resource that is specially used for the measurement reporting procedure initiated by the terminal device. The terminal device may further indicate, to the network device, the quantity of measurement reporting procedures/trigger states/reporting configurations/resource configurations/resource sets/resources that can be requested by the terminal device, so that the network device performs RRC configuration for the terminal device based on the quantity.

In a possible implementation, the measurement reference signal from the network device is measured, and a measurement result is determined; and the measurement result is sent to the network device.

Based on this possible implementation, the terminal device may measure the measurement reference signal sent by the network device and determine the measurement result, so that the network device can perform adjustment for an optimal transmission beam based on the measurement result.

In a possible implementation, the measurement result is sent to the network device after a second time offset starting from the sending moment or the receiving moment of the first response information.

Based on this possible implementation, the terminal device may determine, based on the second time offset, the moment of sending the measurement result to the network device.

According to a second aspect, a beam measurement method is provided. The method may be performed by a network device, or may be performed by a component of the network device, for example, a processor, a chip, or a chip system of the network device, or may be implemented by a logical module or software that can implement all or some functions of the network device. The method includes: A network device receives first request information from a terminal device; sends first response information to the terminal device; and sends a measurement reference signal to the terminal device after a first time offset starting from a sending moment or a receiving moment of the first response information. The first request information is for requesting to initiate a measurement reporting procedure, and the first response information indicates that the network device agrees to initiation of a measurement reporting procedure. Based on the second aspect, the network device receives the first request information from the terminal device, so that the terminal device actively requests to initiate a measurement reporting procedure, and quickly re-determine an optimal reception beam, improving data transmission reliability. The network device may further respond to the received first request information by using the first response information sent to the terminal device, that is, agree to initiation of a measurement reporting procedure. The network device may determine, based on the first time offset, the moment of sending the measurement reference signal, and quickly determine an optimal transmission beam by sending the measurement reference signal, avoiding a transmission performance loss caused by using a non-optimal transmission beam, and improving transmission performance.

In a possible implementation, the first request information includes one or more of the following: identification information of the first request information, event information, trigger state information, aperiodic reporting association information, reporting configuration information, resource configuration information, resource set information, resource information, beam information, or cell information. The event information indicates one or more of the following events: terminal device rotating, terminal device moving, terminal device rotating and moving, terminal device rotating and not moving, terminal device moving and not rotating, beam quality deteriorating, or beam quality of a current beam being less than beam quality of a candidate beam; the beam information indicates a transmission beam used by the network device to send the measurement reference signal; and the cell information indicates a cell associated with the measurement reporting procedure.

Based on this possible implementation, the identification information of the first request information may be used to indicate the first request information. The event information may be used to enable the network device to determine an event associated with the first request information. The trigger state information, the aperiodic reporting association information, the reporting configuration information, the resource configuration information, the resource set information, or the resource information may indicate the measurement reporting procedure associated with the first request information and the terminal device requests to initiate. The beam information may indicate the transmission beam used by the network device to send the measurement reference signal, and the network device may send the measurement reference signal over the transmission beam indicated by the terminal device, reducing a resource loss caused by sending the measurement reference signal by the network device over another transmission beam, and improving beam measurement efficiency. The cell information may enable the network device to quickly locate the cell associated with the first request information, reducing a time loss of cell locating.

In a possible implementation, the first response information includes one or a combination of the following: first indication information (the first indication information indicates that the first response information is a response to the first request information), an index of a HARQ process, an NDI field, a measurement trigger indication field, or second indication information (the second indication information indicates trigger state information, aperiodic reporting association information, or reporting configuration information that is indicated by the first request information to which the network device responds). The index of the HARQ process is the same as an index of a HARQ process used for transmitting the first request information; the NDI field is in a state of toggled; a field value of the measurement trigger indication field is not equal to 0; and a trigger state indicated by the measurement trigger indication field is the same as a trigger state indicated in the first request information.

Based on this possible implementation, the first response information sent by the network device may include one or a combination of the foregoing items, so that the terminal device can determine that the first response information is a response to the first request information.

In a possible implementation, the first response information includes the index of the HARQ process.

In a possible implementation, the first response information includes the index of the HARQ process, the NDI field, and the measurement trigger indication field, where the field value of the measurement trigger indication field is not equal to 0.

In a possible implementation, the first response information includes the index of the HARQ process, the NDI field, and the measurement trigger indication field, where the trigger state indicated by the measurement trigger indication field in the first response information is equal to the trigger state indicated in the first request signaling.

Based on the foregoing three possible implementations, the network device may explicitly or implicitly indicate, by using the foregoing fields, that the first response information is a response to the first request information sent by the terminal device. After receiving the first response information, the terminal device may determine, based on the foregoing fields included in the first response information, that the first response information is a response to the first request information, to determine that the network device agrees to initiation of a measurement reporting procedure, implementing beam measurement and adjustment for an optimal reception beam, avoiding a transmission performance loss caused by using a non-optimal reception beam, and improving transmission performance.

In a possible implementation, the second indication information is a bitmap, one bit in the bitmap corresponds to one piece of trigger state information, aperiodic reporting association information, or reporting configuration information that is indicated by the first request information, and the bit indicates whether the network device responds to the trigger state information, the aperiodic reporting association information, or the reporting configuration information corresponding to the bit.

Based on this possible implementation, the terminal device is enabled to determine, based on each bit of the second indication information, whether the first response information from the network device is a response to the trigger state information, the aperiodic reporting association information, or the reporting configuration information associated with the first request information.

In a possible implementation, before the first request information is received, RRC configuration information is sent to the terminal device.

Based on this possible implementation, the RRC configuration information may provide measurement configuration information, and the network device may obtain, based on the RRC configuration information, the measurement configuration information associated with the first response information, and then send the measurement reference signal based on the measurement configuration information, to enable the terminal device to implement beam measurement, and re-determine an optimal reception beam, improving transmission performance.

In a possible implementation, the RRC configuration information is used to configure one or more of the following: a trigger state specially used for a measurement reporting procedure initiated by a terminal device, a reporting configuration specially used for a measurement reporting procedure initiated by a terminal device, aperiodic reporting association information specially used for a measurement reporting procedure initiated by a terminal device, a resource configuration specially used for a measurement reporting procedure initiated by a terminal device, a resource set specially used for a measurement reporting procedure initiated by a terminal device, or a resource specially used for a measurement reporting procedure initiated by a terminal device.

Based on this possible implementation, the network device may configure, for the terminal device by using the RRC configuration information, the trigger state/reporting configuration/aperiodic reporting association information/resource configuration/resource set/resource that is specially used for the measurement reporting procedure initiated by the terminal device, so that the terminal device actively requests to initiate a measurement reporting procedure based on the RRC configuration information, to quickly re-determine an optimal reception beam, avoiding a transmission performance loss caused by using a non-optimal reception beam, and improving high-frequency transmission performance.

In a possible implementation, the RRC configuration information further includes third indication information, and the third indication information indicates whether the terminal device is allowed to request to initiate the measurement reporting procedure.

Based on this possible implementation, the network device may send the third indication information to the terminal device, to indicate whether the terminal device can actively initiate a measurement reporting procedure. If the terminal device determines that the terminal device can actively initiate a measurement reporting procedure, the terminal device may actively request, from the network device, for initiation of a measurement reporting procedure when a direction of a reception beam changes, to perform re-adjustment for an optimal reception beam based on the measurement reporting procedure, improving communication performance.

In a possible implementation, the measurement configuration information associated with the first response information is determined from the RRC configuration information based on the first response information; and the network device sends the measurement reference signal to the terminal device based on the measurement configuration information associated with the first response information.

Based on this possible implementation, the network device may obtain, based on the RRC configuration information, the measurement configuration information associated with the first response information, and send the measurement reference signal based on the measurement configuration information, to enable the terminal device to perform adjustment for an optimal reception beam based on the measurement reference signal from the network device, improving transmission performance.

In a possible implementation, terminal device capability information sent by the terminal device is received. The terminal device capability information includes one or more of the following: fourth indication information, a quantity of measurement reporting procedures that can be requested by the terminal device, a quantity of reporting configurations that can be requested by the terminal device, a quantity of trigger states that can be requested by the terminal device, a quantity of resource configurations that can be requested by the terminal device, a quantity of resource sets that can be requested by the terminal device, or a quantity of resources that can be requested by the terminal device. The fourth indication information indicates whether the terminal device supports requesting to initiate a measurement reporting procedure by the terminal device.

Based on this possible implementation, the network device may learn of, based on the fourth indication information from the terminal device, whether the terminal device supports requesting to initiate a measurement reporting procedure. If the terminal device supports requesting to initiate a measurement reporting procedure, the network device may configure, for the terminal device based on the fourth indication information and by using the RRC configuration information, information such as the trigger state/reporting configuration/aperiodic reporting association information/resource configuration/resource set/resource that is specially used for the measurement reporting procedure initiated by the terminal device. The network device may further perform RRC configuration for the terminal device based on the quantity of measurement reporting procedures/trigger states/reporting configurations/resource configurations/resource sets/resources that can be requested by the terminal device.

In a possible implementation, the first request information received from the terminal device includes beam information, and a transmission beam is determined based on the beam information; and the measurement reference signal is sent to the terminal device over the transmission beam. The beam information indicates the transmission beam used by the network device to send the measurement reference signal.

Based on this possible implementation, the network device may send the measurement reference signal over the transmission beam indicated by the terminal device by using the beam information, reducing a resource loss caused by sending the measurement reference signal by the network device over another transmission beam, and improving beam measurement efficiency.

According to a third aspect, a communication apparatus is provided, and is configured to implement the beam measurement method according to the first aspect. The communication apparatus may be the terminal device in the first aspect, or an apparatus or a component, such as a chip, included in the terminal device.

The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module, respectively configured to implement a sending function and a receiving function in the first aspect and any possible implementation of the first aspect. The processing module may be configured to implement a processing function in the first aspect and any possible implementation of the first aspect. For example, the transceiver module sends first request information to a network device; receives first response information from the network device; and receives a measurement reference signal from the network device after a first time offset starting from a sending moment or a receiving moment of the first response information. The first request information is for requesting to initiate a measurement reporting procedure, and the first response information indicates that the network device agrees to initiation of a measurement reporting procedure.

Optionally, the transceiver module and the processing module of the communication apparatus according to the third aspect may further perform corresponding functions in any possible implementation of the first aspect. For details, refer to the detailed descriptions in the method examples. For beneficial effects that can be achieved, refer to the foregoing related content.

According to a fourth aspect, a communication apparatus is provided, and is configured to implement the beam measurement method according to the second aspect. The communication apparatus may be the network device in the second aspect, or an apparatus or a component, such as a chip, included in the network device.

The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module, respectively configured to implement a sending function and a receiving function in the second aspect and any possible implementation of the second aspect. The processing module may be configured to implement a processing function in the second aspect and any possible implementation of the second aspect. For example, the transceiver module receives first request information from a terminal device; sends first response information to the terminal device; and sends a measurement reference signal to the terminal device after a first time offset starting from a sending moment or a receiving moment of the first response information. The first request information is for requesting to initiate a measurement reporting procedure, and the first response information indicates that the network device agrees to initiation of a measurement reporting procedure.

Optionally, the transceiver module and the processing module of the communication apparatus according to the fourth aspect may further perform corresponding functions in any possible implementation of the second aspect. For details, refer to the detailed descriptions in the method examples. For beneficial effects that can be achieved, refer to the foregoing related content.

According to a fifth aspect, a communication apparatus is provided, including at least one processor. The processor is configured to execute computer instructions stored in a memory or use a logic circuit, to cause the communication apparatus to perform the beam measurement method according to any one of the foregoing aspects or the possible implementations of any one of the foregoing aspects. The communication apparatus may be the terminal device in the first aspect or any possible implementation of the first aspect, or an apparatus or a component, such as a chip, included in the terminal device; or the communication apparatus may be the network device in the second aspect or any possible implementation of the second aspect, or an apparatus or a component, such as a chip, included in the network device. In some possible implementations, the communication apparatus further includes a memory, configured to store computer instructions and/or a configuration file of a logic circuit. Optionally, the memory and the processor are integrated together, or the memory is independent of the processor.

According to a sixth aspect, a communication apparatus is provided, including a processor and a communication interface. The communication interface is configured to input and/or output a signal. The processor is configured to execute a computer program or instructions, to cause the communication apparatus to perform the beam measurement method in any one of the foregoing aspects. The communication apparatus may be the terminal device in the first aspect or any possible implementation of the first aspect, or an apparatus or a component, such as a chip, included in the terminal device; or the communication apparatus may be the network device in the second aspect or any possible implementation of the second aspect, or an apparatus or a component, such as a chip, included in the network device. In some possible implementations, the communication interface is an interface circuit, and is configured to read and write computer instructions. For example, the interface circuit is configured to receive computer-executable instructions (where the computer-executable instructions are stored in a memory, and may be directly read from the memory, or may be read via another component), and transmit the computer-executable instructions to the processor. In some possible implementations, the communication interface is configured to communicate with a module other than the communication apparatus.

In some possible implementations, the communication apparatus may be a chip or a chip system. When the apparatus is the chip system, the chip system may include a chip, or may include a chip and another discrete component.

According to a seventh aspect, a communication apparatus is provided, including a logic circuit and an interface circuit. The interface circuit is configured to input information and/or output information. The logic circuit is configured to perform the beam measurement method in any one of the foregoing aspects, and perform processing and/or generate to-be-output information based on input information. The communication apparatus may be the terminal device in the first aspect or any possible implementation of the first aspect, or an apparatus or a component, such as a chip, included in the terminal device; or the communication apparatus may be the network device in the second aspect or any possible implementation of the second aspect, or an apparatus or a component, such as a chip, included in the network device. According to an eighth aspect, a computer-readable storage medium is provided. The computer-readable storage medium stores a computer program or instructions; and when the computer program or the instructions are executed by a processor, the beam measurement method in any one of the foregoing aspects is performed.

According to a ninth aspect, a computer program product is provided. When the computer program product is executed by a processor, the beam measurement method in any one of the foregoing aspects is performed.

It may be understood that when the communication apparatus provided in any one of the third aspect to the seventh aspect is a chip, the foregoing sending action/function may be understood as outputting information, and the foregoing receiving action/function may be understood as inputting information.

For technical effects brought by any implementation of the third aspect to the ninth aspect, refer to the technical effects brought by the first aspect or any possible implementation of the first aspect, or refer to the technical effects brought by the second aspect or any possible implementation of the second aspect. Details are not described herein again. According to a tenth aspect, a communication system is provided. The communication system includes the terminal device according to the first aspect or any possible implementation of the first aspect and the network device according to the second aspect or any possible implementation of the second aspect.

## BRIEF DESCRIPTION OF DRAWINGS

FIG. 1 is a diagram of a downlink beam management procedure according to an embodiment of this application;
FIG. 2 is a diagram of a communication system according to an embodiment of this application;
FIG. 3 is a diagram of an uplink beam management procedure according to an embodiment of this application;
FIG. 4 is a diagram of a measurement reporting procedure according to an embodiment of this application;
FIG. 5 is a diagram of a communication system according to an embodiment of this application;
FIG. 6 is a diagram of a communication system according to an embodiment of this application;
FIG. 7 is a diagram of a communication apparatus according to an embodiment of this application;

FIG. 8 is a diagram of a beam measurement method according to an embodiment of this application;

FIG. 9 is a diagram of a beam measurement method according to an embodiment of this application;

FIG. 10 is a diagram of a structure of a terminal device according to an embodiment of this application;

FIG. 11 is a diagram of a structure of a network device according to an embodiment of this application; and

FIG. 12 is a diagram of a structure of another communication apparatus according to an embodiment of this application.

## DESCRIPTION OF EMBODIMENTS

The following describes implementations of embodiments of this application in detail with reference to accompanying drawings in this specification.

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "multiple" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatuses provided in embodiments of this application may also correspondingly implement these features or functions. Details are not described herein.

In this application, unless otherwise specified, mutual reference may be made between same or similar parts of different embodiments. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

For ease of understanding the technical solutions in embodiments of this application, related technologies of this application are first briefly described below.

(1) Beam (beam)

In a new radio (new radio, NR) protocol, a beam may be represented as a spatial domain filter (spatial domain filter, or referred to as a spatial filter (spatial filter)), a spatial domain parameter (spatial domain parameter, or referred to as a spatial parameter (spatial parameter)), a spatial domain setting (spatial domain setting, or referred to as a spatial setting (spatial setting)), or quasi co-location (quasi-colocation, QCL) information (or referred to as a QCL assumption, a QCL indication, or the like).

The beam may be indicated by a transmission configuration indicator (transmission configuration indicator, TCI)-state (state) parameter, or by a spatial relation (spatial relation) parameter.

In this application, the beam may be replaced with a spatial domain filter, a spatial filter, a spatial domain parameter, a spatial parameter, a spatial domain setting, a spatial setting, QCL information, a QCL assumption, a QCL indication, a TCI-state (for example, a downlink (downlink, DL) TCI-state, or an uplink (uplink, UL) TCI-state), a spatial relation, or the like. The foregoing terms are equivalent to each other, and the beam may also be replaced with another term indicating a beam. This is not limited.

Optionally, the beam may be a wide beam, a narrow beam, or another type of beam. This is not limited.

Optionally, a beam forming technology may be a beamforming technology or another technology. This is not limited. The beamforming technology may be a digital beamforming technology, an analog beamforming technology, a hybrid digital/analog beamforming technology, or the like.

In the protocol, the word beam is not directly used to represent a beam, while another manner is used to implicitly describe a beam-related operation. A beam generally corresponds to a resource.

For example, beam measurement is used as an example. During beam measurement, there is a correspondence between a beam and a resource (a network device sends, over a beam, a resource corresponding to the beam), and a terminal device may measure different beams by using different resources. Correspondingly, quality of the resource measured by the terminal device is equal to quality of the beam measured by the terminal device. The terminal device feeds back the measured resource quality, and the network device may learn of the quality of the beam.

For example, data transmission is used as an example. During data transmission, beam information may be indicated by using a resource associated with the beam information.

For example, the network device indicates information about a physical downlink shared channel (physical downlink shared channel, PDSCH) beam of the terminal device through a TCI field in downlink control information (downlink control information, DCI).

During beam measurement, each beam of the network device corresponds to one resource. Therefore, an index of a resource may be used to identify a beam corresponding to the resource.

A beam used to send a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using a TCI-state.

The transmission beam may be signal strength distribution formed in different spatial directions after a signal is transmitted through an antenna.

A beam used to receive a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using a spatial relation (spatial relation), an uplink TCI-state, or a sounding reference signal (sounding reference signal, SRS) resource (indicating a transmission beam using the SRS). Therefore, the uplink beam may alternatively be replaced with the SRS resource. The reception beam may be signal strength distribution, in different spatial directions, of a radio signal receive through an antenna.

Optionally, multiple beams having a same or similar communication feature may be considered as one beam, and the beam may include one or more antenna ports used for transmission of a data channel, a control channel, a sounding signal, and the like.

One or more antenna ports forming one beam may also be considered as one antenna port group, and the antenna port or the antenna port group may be represented as an antenna panel.

(2) Resource (resource)

Optionally, the resource may be an uplink signal resource, including but not limited to an SRS and a demodulation reference signal (demodulation reference signal, DMRS).

Optionally, the resource may be a downlink signal resource, including but not limited to: a channel state information reference signal (channel state information reference signal, CSI-RS), a cell-specific reference signal (cell specific reference signal, CS-RS), a user equipment-specific reference signal (user equipment specific reference signal, US-RS), a DMRS, and a synchronization signal/physical broadcast channel block (synchronization system/physical broadcast channel block, SS/PBCH block).

The SS/PBCH block may be referred to as a synchronization signal block (synchronization signal block, SSB) for short.

Optionally, the resource may be configured by using RRC signaling. In terms of a configuration structure, one resource is one data structure, and includes a related parameter of an uplink and/or a downlink signal corresponding to the resource,

The related parameter may be a type of the uplink signal and/or the downlink signal, a resource element carrying the uplink signal and/or the downlink signal, a sending time and periodicity of the uplink signal and/or the downlink signal, a quantity of ports used for sending the uplink signal and/or the downlink signal, or the like. This is not limited. Each resource of the uplink/downlink signal has a unique index, to identify the resource of the downlink signal. It may be understood that the index of the resource may also be referred to as an identifier of the resource. This is not limited in embodiments of this application.

(3) Antenna panel (panel)

Optionally, the antenna panel may be an antenna panel of a network device, or may be an antenna panel of a terminal device.

One antenna panel usually has one or more antennas. These antennas are arranged to form an antenna array, and beamforming is performed, to form an analog beam, a digital beam, or a hybrid digital/analog beam.

For example, an analog beam is used as an example. The antenna array may generate analog beams pointing to different directions. In other words, multiple analog beams may be formed on each antenna panel. The best analog beam to be used by the antenna panel may be determined through beam measurement.

For example, an antenna panel of a terminal device is used as an example. The terminal device may be equipped with multiple antenna panels. These antenna panels may be distributed at different locations and face different directions. This can ensure that at least one antenna panel faces the network device regardless of an orientation of the terminal device, to implement data transmission with the network device. The terminal device may simultaneously enable all antenna panels for transmission. Alternatively, to reduce power consumption of the terminal device, the terminal device may perform transmission by using a single antenna panel at a time, and disable other unused antenna panels. The terminal device may send a status (on or off) of the antenna panel to the network device. In other words, the terminal device and the network device may exchange status information of the antenna panel.

In embodiments of this application, unless otherwise specified, an antenna panel is an antenna panel of the terminal device. In the protocol, the antenna panel may be represented by a panel, a panel index, or the like.

Optionally, the antenna panel may be represented in the following manners:

Manner 1: The antenna panel may be represented by using an antenna port (for example, a CSI-RS port, an SRS port, a DMRS port, a phase tracking reference signal (phase tracking reference signal, PTRS) port, a cell reference signal (cell reference signal, CRS) port, a time-frequency tracking reference signal (tracking reference signal, TRS) port, or an SSB port) or an antenna port group.

Manner 2: The antenna panel may be represented by using a resource (for example, a CSI-RS resource, an SRS resource, a DMRS resource, a PTRS resource, a CRS resource, a TRS resource, or an SSB resource) or a resource group.

Manner 3: The antenna panel may be represented by using a channel (for example, a physical uplink control channel (physical uplink control channel, PUCCH), a physical uplink shared channel (physical uplink sharing channel, PUSCH), a physical random access channel (physical random access channel, PRACH), a PDSCH, a physical downlink control channel (physical downlink sharing channel, PDCCH), or a physical broadcast channel (physical broadcast channel, PBCH)).

Manner 4: The antenna panel may be represented by using a beam, QCL, a TCI-state, a spatial relation, or an index configured in QCL, a TCI-state, or a spatial relation. Alternatively, the antenna panel may be represented by using a beam group, a QCL group, a TCI-state group, a spatial relation group, or the like.

(4) Beam Management (beam management)

The 5th generation (5th generation, 5G) mobile communication system may use high-frequency communication, that is, use a high-frequency band signal to transmit data. However, a main problem of the high-frequency communication is that signal energy sharply decreases as a transmission distance increases, resulting in a short signal transmission distance. To resolve this problem, an analog beam technology is used in the high-frequency communication. Weighted processing is performed on an antenna array, and signal energy is concentrated in a small angle range, to form a signal similar to a light beam (referred to as an analog beam, a beam for short), extending the transmission distance.

In a communication system, a network device and a terminal device need to use a specific beam to perform uplink and downlink data transmission. The network device and the terminal device may determine, by using a beam measurement process (for example, downlink beam management and uplink beam management), a specific beam to be used for transmission.

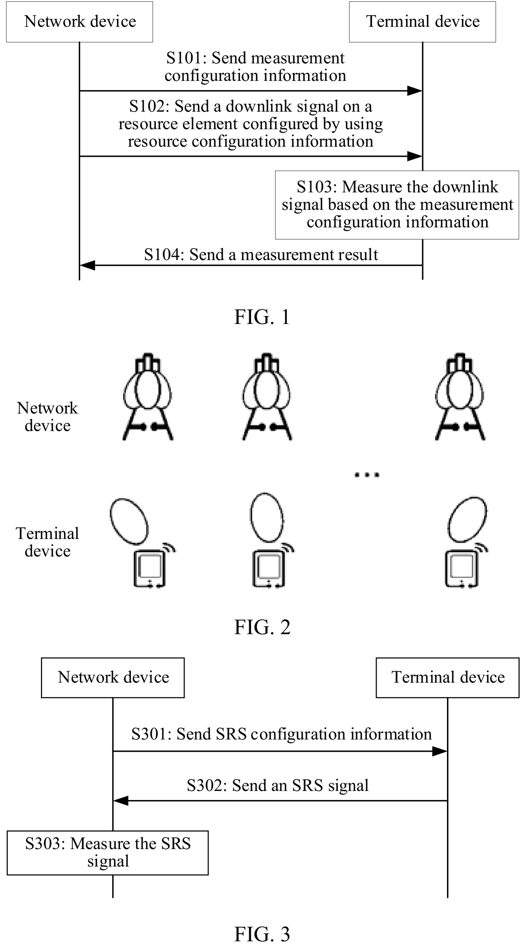

In a possible embodiment, according to FIG. 1, downlink beam management may include the following.

S101: A network device sends measurement configuration information to a terminal device, and correspondingly, the terminal device receives a measurement reference signal from the network device.

The measurement configuration information is sent by the network device to the terminal device by using RRC signaling, and mainly includes two parts: resource configuration (resourceConfig) information and reporting configuration (reportConfig) information.

The resource configuration information is information related to a measurement resource, and is configured by using a three-level structure (resource configuration (resourceConfig or resourceSetting) - resource set (resourceSet) - resource) in a protocol. In addition, the resource configuration information may further include some other parameters, such as a resource periodicity and a signal type corresponding to the resource.

For example, the network device may configure one or more resource configurations for the terminal device. Each resource configuration includes one or more resource sets, and each resource set may include one or more resources. Each resource configuration, resource set, or resource includes an index of the resource configuration, the resource set, or the resource.

The reporting configuration information is information related to reporting of a measurement result, and is configured through reporting configuration in a protocol. The network device may configure one or more reporting configurations for the terminal device. Each reporting configuration includes information related to reporting, such as reporting indicator, reporting time, reporting periodicity, and reporting format. In addition, the reporting configuration further includes an index of a resource configuration, to indicate a measurement configuration based on which a reported result is measured.

In a possible embodiment, to facilitate further understanding of the measurement architecture, the R15 protocol is used as an example. Specific formats of the resource configuration and the reporting configuration in the R15 protocol are shown as follows:

<Definition of the resource configuration: The resource configuration includes one or more resource sets, and one resource set includes one or more resources>

```
CSI-ResourceConfig ::=      SEQUENCE {
      <Index of the resource configuration>
      csi-ResourceConfigId      CSI-ResourceConfigId,
      <The resource configuration includes a resource set list, where the resource set list may be a list of nzp-CSI-RS-
SSB resource sets or a list of csi-IM resource sets>
      csi-RS-ResourceSetList    CHOICE {
          <The nzp-CSI-RS-SSB resource set list includes either or both of multiple nzp-CSI-RS resource sets or
multiple csi-SSB resource sets>
          nzp-CSI-RS-SSB-ResourceSetList          SEQUENCE {
            nzp-CSI-RS-ResourceSetList  SEQUENCE (SIZE (1..maxNrofNZP-CSI-RS-ResourceSetsPerConfig)) OF
            NZP-CSI-RS-ResourceSetId
            csi-SSB-ResourceSetList     SEQUENCE (SIZE (1..maxNrofCSI-SSB-ResourceSetsPerConfig)) OF CSI-
SSB-ResourceSetId
          },
          <The csi-IM resource set list includes multiple csi-IM resource sets>
          csi-IM-ResourceSetList SEQUENCE (SIZE (1..maxNrofCSI-IM-ResourceSets PerConfig)) OF CSI-IM-
ResourceSetId
      },
      <A frequency of one cell is divided into multiple bandwidth blocks, and bwp-id indicates an identifier of the
bandwidth block>
      bwp-Id                BWP-Id,
      <Time domain sending feature of a resource in the resource configuration: periodic sending, semi-persistent
sending, or aperiodic sending>
      resourceType          ENUMERATED { aperiodic, semiPersistent, periodic },
      ...
      <The resource set includes one or more resources. The nzp-CSI-RS resource set includes one or more nzp-CSI-
RS resources, the csi-SSB resource set includes one or more SSB resources, and the csi-IM resource set includes one
or more csi-IM resources. There are many types of resource sets, which are not enumerated herein>
}
<Definition of the reporting configuration, where some parameters irrelevant to this patent are omitted>
CSI-ReportConfig ::=        SEQUENCE {
      <Index of the reporting configuration>
      reportConfigId              CSI-ReportConfigId,
      <Identifier of a resource configuration used to measure channel information>
      resourcesForChannelMeasurement        CSI-ResourceConfigId,
```

<Identifier of a resource configuration used to measure interference information, where resource types included in the resource configuration are csi-IM>

    csi-IM-ResourcesForInterference       CSI-ResourceConfigId

<Identifier of a resource configuration used to measure interference information, where resource types included in the resource configuration are nzp-CSI-RS>

    nzp-CSI-RS-ResourcesForInterference    CSI-ResourceConfigId

<Reported quantity, such as reference signal received power (reference signal received power, RSRP) and channel quality indicator (channel quality indicator, CQI) >

    reportQuantity               CHOICE {

       ...

    },

<Group-based reporting rule, which may be configured as enabled or disabled>

    groupBasedBeamReporting         CHOICE {

       <For configuration as enabled, other details do not need to be further configured, and the user equipment (user equipment, UE) reports two resource identifiers, CSI-RS indexes (CSI-RS index, CRI) or SSB resource indexes (SSB resource index, SSBRI), that can be simultaneously received>

       enabled               NULL,

       <For configuration as disabled, a specific quantity of beams to be reported needs to be further configured. The quantity may be configured as 1 to 4. For example, if the quantity is configured as 4, the UE reports four resource identifiers. The four resource identifiers are not required to be received simultaneously>

       disabled              SEQUENCE {

         nrofReportedRS             ENUMERATED {n1, n2, n3, n4}

       }

    },

}

S102: The network device sends a downlink signal to the terminal device on a resource element corresponding to the resource configured by using the resource configuration information. Correspondingly, the terminal device receives the downlink signal from the network device.

The terminal device performs measurement based on the downlink signal sent by the network device, to determine quality of each resource (that is, quality of a beam corresponding to the resource).

S103: The terminal device measures the downlink signal based on the measurement configuration information. S104: The terminal device sends a measurement result to the network device. Correspondingly, the network device receives the measurement result from the terminal device.

Optionally, the measurement result may be in a form of beam measurement report. The beam measurement report may include indexes of one or more resources, resource quality, and the like. This is not limited.

For example, a reporting format used for beam measurement in the R15 protocol is used as an example, and the reporting format may be shown in Table 1.

Table 1 Reporting format used for beam measurement in the R15 protocol

| Report format (field) | Length (bitwidth) |
|---|---|
| CRI | $\left\lceil \log_2\left(K_s^{CSI-RS}\right) \right\rceil$ |
| SSBRI | $\left\lceil \log_2\left(K_s^{SSB}\right) \right\rceil$ |

(continued)

| Report format (field) | Length (bitwidth) |
|---|---|
| RSRP | 7 |
| Other RSRP (differential RSRP) | 4 |

The CRI field and the SSBRI field indicate a to-be-reported resource index. The CRI or the SSBRI alone may be reported, or both may be reported. This is not limited. $\left\lceil \log_2\left(K_s^{CSI-RS}\right)\right\rceil$ and $\left\lceil \log_2\left(K_s^{SSB}\right)\right\rceil$ are the lengths of the CRI field and the SSBRI field. RSRP indicates the resource quality. The RSRP may be reported by using a differential reporting criterion, that is, the RSRP of the best resource (for example, the RSRP field in Table 1) is quantized and reported by using 7 bits, and an other RSRP (for example, other RSRP in Table 1) field is quantized and reported by using 4 bits. Optionally, the measurement result sent by the terminal device to the network device may be carried on a PUCCH or a PUSCH. This is not limited.

In conclusion, for each measurement resource, the network device may send, by using one transmission beam, a measurement reference signal associated with the measurement resource, and the terminal device measures the measurement reference signal sent by each transmission beam, to determine quality of the transmission beam or the measurement resource. For each transmission beam, the terminal device may further determine an optimal reception beam, to receive a signal sent over the transmission beam.

For example, RSRP is used as an indicator for measuring a measurement resource. The terminal device may measure RSRP of each beam, select one or more measurement resources with the largest RSRP, and report an index of the measurement resource and corresponding RSRP to the network device. The network device may select one or more measurement resources (beams) from reported measurement resources for data transmission.

For a network device and a terminal device having multiple beams, the terminal device may determine, by using a beam management procedure, a transmission beam used by the network device to transmit data for the terminal device, and a reception beam used by the terminal device to receive data.

For example, as shown in FIG. 2, an example in which a network device has M beams and a terminal device has N beams is used. The network device may configure M measurement resources for the terminal device, and associate the M measurement resources with the M transmission beams. In each measurement periodicity, the network device may separately send the M measurement resources over M transmission beams, and the terminal device may receive and measure the M measurement resources over one reception beam. After N measurement periodicities, the terminal device traverses all the N reception beams, to complete channel measurement between all the transmission beams and all the reception beams. Based on the beam measurement, the terminal device may select K transmission beams with best quality, and report, to the network device, RSRP and measurement resource indexes of K measurement resources associated with the K transmission beams. In addition, the terminal device may also determine an optimal reception beam corresponding to each transmission beam, and buffer information about the optimal reception beam corresponding to each transmission beam. When the network device performs sending over a transmission beam, the terminal device may perform receiving over an optimal reception beam associated with the transmission beam.

In another possible embodiment, according to FIG. 3, uplink beam management may include the following.

S301: A network device sends uplink signal resource (Sounding Reference Resource, SRS) configuration information to a terminal device. Correspondingly, the terminal device receives the SRS configuration information from the network device.

Optionally, the network device may configure, for the terminal device, one or more SRS resource sets (SRS-ResourceSet) used for uplink beam management, where each SRS resource set includes one or more SRS resources (SRS-Resource).

Each SRS resource is associated with one beam. Each SRS resource includes one SRS signal, and uplink beam measurement may be performed by measuring SRS signals corresponding to these SRS resources.

For example, a specific format of the SRS resource configuration in the R15 protocol is shown as follows:

```
SRS-ResourceSet ::=       SEQUENCE {
      <Index of SRS-ResourceSet>
      srs-ResourceSetId      SRS-ResourceSetId,
      <SRS-Resource included in SRS-ResourceSet>
      srs-ResourceIdList      SEQUENCE (SIZE(1..maxNrofSRS-ResourcesPerSet)) OF SRS-ResourceId
      <SRS-ResourceSet type: aperiodic, semi-persistent, or periodic>
      resourceType      CHOICE {
            aperiodic      SEQUENCE {...},
            semi-persistent                                          SEQUENCE {...},
            periodic                                                 SEQUENCE {...}
      },
      <Functions of SRS-ResourceSet: beam management, codebook-based uplink transmission, non-codebook-based
uplink transmission, and uplink channel measurement>
      usage      ENUMERATED {beamManagement, codebook, nonCodebook, antennaSwitching},
      }
}
SRS-Resource ::=                SEQUENCE {
      <Index of SRS-Resource>
      srs-ResourceId                SRS-ResourceId,
      <Quantity of SRS-Resource antenna ports>
      nrofSRS-Ports                ENUMERATED {port1, ports2, ports4},
      <Time-frequency resource location corresponding to SRS-Resource>
      resourceMapping                SEQUENCE {..},
      <SRS-ResourceSet type: aperiodic, semi-persistent, or periodic>
      resourceType                CHOICE {
            aperiodic                SEQUENCE {...},
            semi-persistent                SEQUENCE {...},
            periodic                SEQUENCE {...}
      },
      <Spatial information of SRS-ResourceSet, used to indicate an occurrence spatial parameter of the SRS resource>

                        spatialRelationInfo                SRS-SpatialRelationInfo
                        ...
            }
```

S302: The terminal device sends an SRS signal to the network device. Correspondingly, the network device receives the SRS signal from the terminal device.

The terminal sends, based on a configuration of each SRS resource, a corresponding SRS signal over an uplink transmission beam associated with the SRS resource.

S303: The network device measures each SRS signal sent by the terminal device, that is, measures quality of each SRS resource.

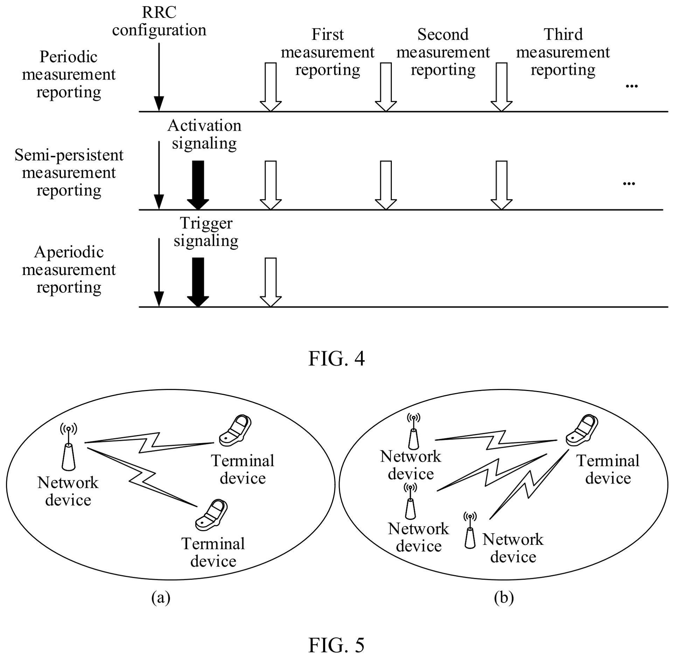

Based on the foregoing description of beam measurement, in a beam measurement process, the network device may configure a measurement reporting procedure for the terminal device. As shown in FIG. 4, the network device may configure three measurement reporting procedures for the terminal device: a periodic measurement reporting procedure, a semi-persistent measurement reporting procedure, and an aperiodic measurement reporting procedure. The periodic measurement reporting procedure is periodically performed. To be specific, the network device may periodically send a measurement reference signal to the terminal device, and the terminal device measures the measurement reference signal and reports a measurement result. The periodic measurement reporting procedure may start with an RRC configuration. Once the RRC configuration takes effect, the procedure is performed periodically. RRC configuration information may be resent, to release a configuration parameter related to the periodic measurement reporting procedure, so as to terminate the periodic measurement reporting procedure.

The semi-persistent measurement reporting procedure is periodically performed. To be specific, the network device may periodically send a measurement reference signal to the terminal device, and the terminal device measures the measurement reference signal and reports a measurement result. The semi-persistent measurement reporting procedure starts with activation signaling instead of an RRC configuration. After the RRC configuration takes effect, the measurement reporting procedure is not performed, and the network device may send activation signaling to the terminal device, to activate a specific semi-persistent measurement reporting procedure. Once activated, the semi-persistent measurement reporting procedure is periodically performed. The network device may further send deactivation signaling to the terminal device, to deactivate a specific semi-persistent measurement reporting procedure. The aperiodic measurement reporting procedure is aperiodically performed. To be specific, the network device may send a measurement reference signal to the terminal device once, and the terminal device measures the measurement reference signal and reports a measurement result. The procedure starts with trigger signaling instead of an RRC configuration. After the RRC configuration takes effect, the measurement reporting procedure is not performed, and the network device sends trigger signaling to the terminal device, to activate a specific aperiodic measurement reporting procedure. Each time the terminal device receives trigger signaling, the terminal device performs measurement reporting once.

However, in the three measurement reporting procedures, the network device determines whether to perform the measurement reporting procedure, and efficiency is low in some scenarios.

For example, when the terminal device rotates in place, a transmission beam associated with the terminal device usually remains unchanged, but an optimal reception beam corresponding to the transmission beam may change. If the foregoing three measurement reporting procedures are used, because the network device does not know that the terminal device has rotated, the network device does not actively activate or trigger associated measurement reporting, and the terminal device cannot quickly re-determine an optimal reception beam. Consequently, in a long period of time, none of reception beams used by the terminal device is optimal, affecting transmission performance.

In conclusion, when the terminal device communicates with the network device over a beam, how to improve data transmission reliability and improve transmission performance becomes a technical problem to be urgently resolved. In this application, to resolve the foregoing technical problem, a terminal device sends first request information to a network device; the terminal device receives first response information from the network device; and the terminal device receives a measurement reference signal from the network device after a first time offset starting from a sending moment or a receiving moment of the first response information. The first request information is for requesting to initiate a measurement reporting procedure, and the first response information indicates that the network device agrees to initiation of a measurement reporting procedure.

In embodiments of this application, the terminal device may send the first request information to the network device to actively request to initiate a measurement reporting procedure, and quickly re-determine an optimal reception beam, improving data transmission reliability. The terminal device may further determine, based on the first response information sent by the network device, that the sent first request information is responded to, that is, determine that the network device agrees to initiation of a measurement reporting procedure. The terminal device may determine, based on the first time offset, the moment of receiving the measurement reference signal, and quickly determine an optimal reception beam based on the received measurement reference signal, avoiding a transmission performance loss caused by using a non-optimal reception beam, and improving transmission performance.

The technical solution in embodiments of this application may be applied to various communication systems. The communication system may be a 3rd generation partnership project (3rd generation partnership project, 3GPP) communication system, for example, a 4th generation (4th generation, 4G) system, a long term evolution (long term evolution, LTE) system, a 5G mobile communication system, an NR system, or a system with hybrid networking of LTE and 5G, a non-terrestrial communication network (non-terrestrial network, NTN) system, a future communication network, such as a mobile communication system evolved after 5G, a vehicle to everything (vehicle to everything, V2X) system, a device-to-device (device-to-device, D2D) communication system, a machine-to-machine (machine-to-machine, M2M) communication system, an internet of things (internet of things, IoT) system, a narrowband internet of things (narrow band-internet of things, NB-IoT) system, an integrated sensing and communication system, a satellite communication system, or the like. The communication system may alternatively be a non-3GPP communication system, for example, a wireless local area network (wireless local area network, WLAN) system such as a wireless fidelity (wireless fidelity, Wi-Fi) system. This is not limited.

For example, a communication system to which this application is applied may be shown in FIG. 5. The communication system may include one or more network devices and one or more terminal devices.

As shown in (a) in FIG. 5, a single network device may transmit data or control signaling to one or more terminal devices. As shown in (b) in FIG. 5, multiple network devices may also simultaneously transmit data or control signaling to a single terminal device.

This application may be applied to various communication scenarios, for example, beam measurement, channel estimation, and signal detection.

The foregoing communication systems and communication scenarios to which this application is applicable are merely examples for description, communication systems and communication scenarios to which this application is applicable are not limited thereto, and the foregoing descriptions do not constitute any limitation on the solutions of this application.

In embodiments of this application, the terminal device may be located in coverage of a beam/cell of the network device, and the network device may provide a communication service for the terminal device.

The terminal device in embodiments of this application may be a device having a wireless transceiver function or a chip or a chip system that may be disposed in the device, may allow a user to access a network, and is a device configured to provide voice and/or data connectivity for the user. The terminal device may also be referred to as UE, a subscriber unit (subscriber unit), a terminal (terminal), a mobile station (mobile station, MS), a mobile terminal (mobile terminal, MT), or the like.

Optionally, the terminal device in embodiments of this application may be a user-side device configured to implement a wireless communication function, for example, a terminal or a chip that may be used in the terminal. The terminal may be UE, a subscriber unit, an access terminal, a terminal unit, a terminal station, a mobile station, a mobile console, a remote station, a remote terminal, a mobile device, a wireless communication device, a terminal agent, a terminal apparatus, or the like in a 5G network or a future public land mobile network (public land mobile network, PLMN) after 5G. The access terminal may be a cellular phone, a smartphone, a cordless phone, a session initiation protocol (session initiation protocol, SIP) phone, a wireless data card, a wireless local loop (wireless local loop, WLL) station, a personal digital assistant (personal digital assistant, PDA), a handheld device (handset) with a wireless communication function, a laptop computer (laptop computer), a tablet computer, a computing device, or another processing device connected to a wireless modem, an in-vehicle device, an unmanned aerial vehicle, a robot, a smart point of sale (point of sale, POS) machine, a customer premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in machine type communication (machine type communication, MTC), a wireless terminal in smart city (smart city), a wireless terminal in smart home (smart home), and the like. Alternatively, the terminal may be a terminal having a communication function in IoT, for example, a terminal in V2X (for example, a vehicle to everything device), a terminal in D2D communication, or a terminal in M2M communication. The terminal may be mobile or stationary.

The network device in embodiments of this application may be any device that is deployed in an access network and that can perform wireless communication with the terminal device, or may be a chip or a chip system that may be disposed in the foregoing device, or may be a logical node or a logical module or a function implemented in a software manner, and may be configured to implement functions such as radio physical control, resource scheduling and radio resource management, radio access control, and mobility management. Specifically, the network device may be a device supporting wired access, or may be a device supporting wireless access.

Optionally, the network device in embodiments of this application is a device that connects a terminal device to a wireless network. The network device may be a node in a radio access network (radio access network, RAN), or may be a base station, and may be referred to as a radio access network node (or device).

For example, the network device may include a base transceiver station (base transceiver station, BTS) in a global system for mobile communications (global system for mobile communications, GSM) or code division multiple access (code division multiple access, CDMA) network. Alternatively, the network device may include a NodeB in a wideband code division multiple access (wideband code division multiple access, WCDMA) network. Alternatively, the network device may include an evolved NodeB (NodeB, eNB, e-NodeB, or evolved NodeB) in an LTE system or an LTE-advanced (LTE-advanced, LTE-A) system, for example, a conventional macro base station eNB and a micro base station eNB in a heterogeneous network scenario. Alternatively, the network device may include a next generation NodeB (next generation NodeB, gNB) in an NR system. Alternatively, the network device may be a network device in a future evolved PLMN. Alternatively, the network device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the network device may include a base station in an NTN, to be specific, may be deployed on a flying platform or a satellite. In the NTN, the network device may serve as a layer 1 (L1) relay (relay), may serve as a base station, or may serve as an integrated access and backhaul (integrated access and backhaul, IAB) node. Alternatively, the network device may be a device that implements a base station function in IoT, for example, a device that implements a base station function in uncrewed aerial vehicle communication, V2X, D2D, or M2M. Alternatively, the network device may be a radio controller in a cloud radio access network (cloud radio access network, CRAN) scenario. Alternatively, the network device may be a wearable device or a vehicle-mounted device. Alternatively, the network device may be a module or unit that can implement some functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the network device may be a network device in an open radio access network (open RAN, ORAN) system or a module of the network device. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. Any one of the CU (or the CU-CP and the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (or referred to as a small cell), a relay station, an access point, a home base station, a TRP, a transmission point (transmitting point, TP), or a mobile switching center. This is not specifically limited in embodiments of this application.

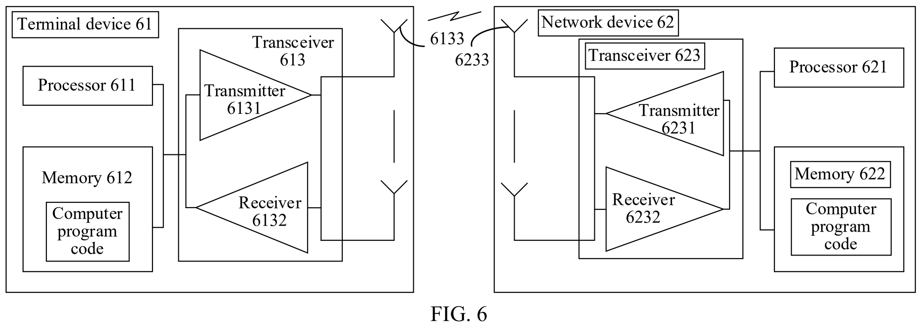

For example, as shown in FIG. 6, communication between each network device and each terminal device in the communication system may also be represented in a form shown in FIG. 6. A terminal device 61 may include a processor 611, a memory 612, and a transceiver 613. The transceiver 613 may include a transmitter 6131, a receiver 6132, and an antenna 6133. The network device 62 may include a processor 621, a memory 622, and a transceiver 623. The transceiver 623 may include a transmitter 6231, a receiver 6232, and an antenna 6233.

For example, the receiver 6132 of the terminal device 61 may receive transmission control information by using the antenna 6133, and the transmitter 6131 of the terminal device 61 may send transmission feedback information to the network device 62 by using the antenna 6133. The transmitter 6231 of the network device 62 may be configured to send transmission control information to the terminal device 61 by using the antenna 6233, and the receiver 6232 of the network device 62 may be configured to receive, by using the antenna 6233, transmission feedback information sent by the terminal device 61.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

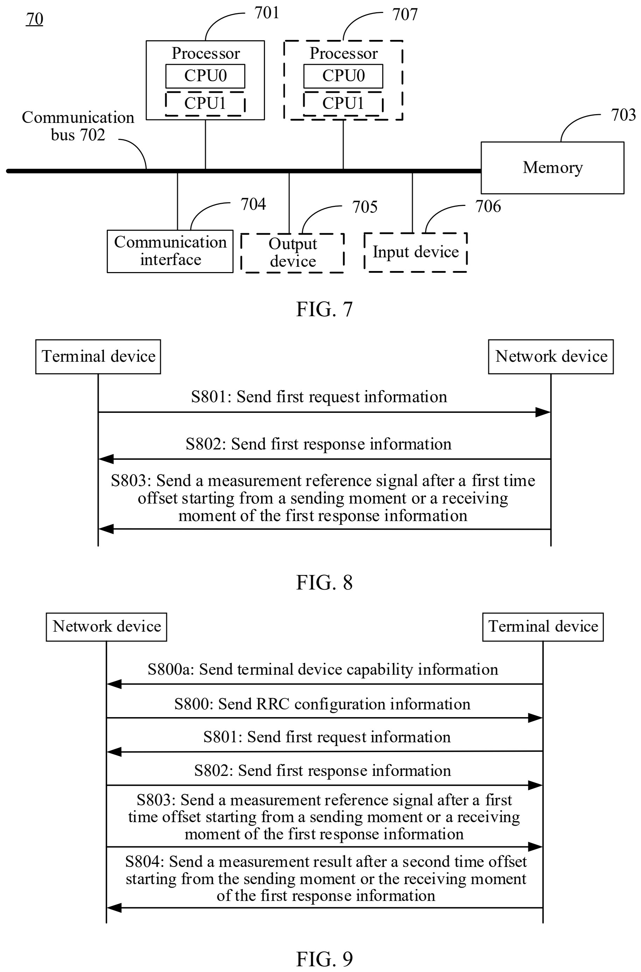

During specific implementation, each terminal device or each network device shown in FIG. 2 to FIG. 6 may use a composition structure shown in FIG. 7, or include components shown in FIG. 7. FIG. 7 is a diagram of composition of a communication apparatus 70 according to an embodiment of this application. The communication apparatus 70 may be a terminal device, or a chip or a system on chip in the terminal device; or may be a network device, or a chip or a system on chip in the network device.

As shown in FIG. 7, the communication apparatus 70 includes one or more processors 701 and/or 707. Further, the communication apparatus 70 may further include a communication bus 702 and at least one communication interface (where FIG. 7 is merely an example, and an example in which the communication apparatus 70 includes a communication interface 704 and one processor 701 is used for description). Optionally, the communication apparatus 70 may further include a memory 703.

The processor 701 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor, or may be a multi-core (multi-CPU) processor.

In a specific implementation, in an embodiment, the processor 701 may include one or more CPUs such as a CPU0 and a CPU1 in FIG. 7.

The communication bus 702 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 7, but this does not mean that there is only one bus or only one type of bus. The communication bus 702 is configured to connect different components in the communication apparatus 70, so that different components in the communication apparatus 70 may communicate and interact with each other.

The communication interface 704 may be a transceiver module, and is configured to communicate with another device or a communication network. The communication network may be, for example, an Ethernet (Ethernet), a RAN, or a wireless local area network (wireless local area networks, WLAN). For example, the communication interface 704 may be an apparatus such as a transceiver or a transceiver machine. Alternatively, the communication interface 704 may be a transceiver circuit located in the processor 701, to implement signal input and signal output of the processor. The memory 703 may be an apparatus having a storage function. For example, the memory 703 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium capable of carrying or storing expected program code in a form of instruction or data structure and capable of being accessed by a computer. This is not limited thereto. The memory may exist independently, and is connected to the processor through the communication bus 702. The memory may alternatively be integrated with the processor.

For example, the memory 703 is configured to store computer-executable instructions for executing the solutions of this application, and the processor 701 controls the execution. The processor 701 is configured to execute the computer-executable instructions stored in the memory 703, to implement the method provided in embodiments of this application.

Alternatively, optionally, in embodiments of this application, the processor 701 may perform functions related to processing in the method provided in the following embodiments in this application, and the communication interface 704 is responsible for communication with another device or a communication network. This is not specifically limited in embodiments of this application.

Optionally, the computer-executable instructions in embodiments of this application may also be referred to as application program code. This is not specifically limited in embodiments of this application.

In a specific implementation, in an embodiment, the communication apparatus 70 may further include an output device 705 and an input device 706. The output device 705 communicates with the processor 701, and may display information in multiple manners. For example, the output device 705 may be a liquid crystal display (liquid crystal display, LCD), a light emitting diode (light emitting diode, LED) display device, a cathode ray tube (cathode ray tube, CRT) display device, or a projector (projector). The input device 706 communicates with the processor 701, and may receive an input from a user in multiple manners. For example, the input device 706 may be a mouse, a keyboard, a touchscreen device, a sensing device, or the like.

It should be noted that, the composition structure shown in FIG. 7 constitutes no limitation on the communication apparatus. In addition to the components shown in FIG. 7, the communication apparatus may include more or fewer components than those shown in the figure, combine some components, or have different component arrangements. The following describes in detail the beam measurement method provided in embodiments of this application with reference to the accompanying drawings. It may be understood that, in embodiments of this application, the terminal device or the network device may perform some or all of the steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

FIG. 8 is a diagram of a beam measurement method according to this application. Refer to FIG. 8. The beam measurement method includes the following steps.

S801: A terminal device sends first request information to a network device. Correspondingly, the network device receives the first request information from the terminal device.

The first request information is for requesting to initiate a measurement reporting procedure.

Optionally, the measurement reporting procedure may be a periodic measurement reporting procedure, a semi-persistent measurement reporting procedure, or an aperiodic measurement reporting procedure. This is not limited. Optionally, the first request information may be carried in one or more of the following signaling: medium access control-control element (medium access control-control element, MAC-CE) signaling, PUCCH signaling, random access preamble sequence, and the like. This is not limited.

For example, the first request information may include one or more of the following information: identification information of the first request information, event information, trigger state information, aperiodic reporting association information, reporting configuration information, resource configuration information, resource set information, resource information, beam information, or cell information.

Alternatively, the aperiodic reporting association information may be replaced with semi-persistent reporting association information, or the aperiodic reporting association information may be replaced with periodic reporting association information.

For example, the first request information may carry the aperiodic reporting association information to indicate that the first request information is used for requesting to initiate an aperiodic measurement reporting procedure; or the first request information may carry the semi-persistent reporting association information to indicate that the first request information is used for requesting to initiate a semi-persistent measurement reporting procedure; or the first request information may carry the periodic reporting association information to indicate that the first request information is used for requesting to initiate a periodic measurement reporting procedure.

(1) Identification information of the first request information

The identification information of the first request information indicates the first request information associated with requesting for initiation of a measurement reporting procedure by the terminal device.

For example, the identification information of the first request information may include an index of the identification information of the first request information.

(2) Event information

The event information indicates an event. The event may be predefined, and may be represented by an index associated with the event.

For example, the event may include one or more of the following: terminal device rotating (for example, a rotation speed exceeds a preset rotation speed threshold), terminal device moving (for example, a moving speed exceeds a preset moving speed threshold), terminal device rotating and moving, terminal device rotating and not moving, terminal device moving and rotating, beam quality deteriorating (quality of a reception beam currently used for data transmission deteriorates, for example, deteriorates by x dB, where x is a preset beam quality deterioration threshold), beam quality of a current beam being less than beam quality of a candidate beam (for example, quality of the reception beam currently used for data transmission is y dB lower than quality of the candidate beam, where y is a preset beam quality threshold).

For example, the event information may include an index of the event.

(3) Trigger state information

The trigger state information may indicate requesting to initiate a measurement reporting procedure associated with specific trigger state information.

For example, the trigger state information may include an index of a trigger state.

For another example, the trigger state information may include a bitmap. The bitmap includes one or more bits. Each bit may be associated with one piece of trigger state information. A value of the bit may be set to 0, to indicate requesting to initiate a measurement reporting procedure associated with the trigger state information, or a value of the bit is set to 1, to indicate not triggering a measurement reporting procedure associated with the trigger state information. Alternatively, a value of the bit is set to 1, to indicate requesting to initiate a measurement reporting procedure associated with the trigger state information, or a value of the bit is set to 0, to indicate not triggering a measurement reporting procedure associated with the trigger state information.

For example, the bitmap includes 2 bits. It is assumed that a first bit is associated with trigger state information 1, and a second bit is associated with trigger state information 2. When a value of the first bit is 0, it indicates requesting to initiate a measurement reporting procedure associated with the trigger state information 1, or when a value of the first bit is 1, it indicates not initiating a measurement reporting procedure associated with the trigger state information 1. When a value of the second bit is 0, it indicates requesting to initiate a measurement reporting procedure associated with the trigger state information 2, or when a value of the second bit is 1, it indicates not initiating a measurement reporting procedure associated with the trigger state information 2.

(4) Aperiodic reporting association information

The aperiodic reporting association information indicates requesting to initiate a measurement reporting procedure associated with specific aperiodic reporting association information.

For example, the aperiodic reporting association information may include an index of the aperiodic reporting association information.

For another example, the aperiodic reporting association information may include a bitmap. The bitmap includes one or more bits, and each bit is associated with one piece of aperiodic reporting association information. A value of the bit may be set to 0, to indicate requesting to initiate a measurement reporting procedure associated with the aperiodic reporting association information, or a value of the bit is set to 1, to indicate not triggering a measurement reporting procedure associated with the aperiodic reporting association information. Alternatively, a value of the bit is set to 1, to indicate requesting to initiate a measurement reporting procedure associated with the aperiodic reporting association information, or a value of the bit is set to 0, to indicate not triggering a measurement reporting procedure associated with the aperiodic reporting association information.

For example, the bitmap includes 2 bits. It is assumed that a first bit is associated with aperiodic reporting association information 1, and a second bit is associated with aperiodic reporting association information 2. When a value of the first bit is 0, it indicates requesting to initiate a measurement reporting procedure associated with the aperiodic reporting association information 1, or when a value of the first bit is 1, it indicates not initiating a measurement reporting procedure associated with the aperiodic reporting association information 1. When a value of the second bit is 0, it indicates requesting to initiate a measurement reporting procedure associated with the aperiodic reporting association information 2, or when a value of the second bit is 1, it indicates not initiating a measurement reporting procedure associated with the aperiodic reporting association information 2.

(5) Reporting configuration information

The reporting configuration information indicates requesting to initiate a measurement reporting procedure associated with specific reporting configuration information.

For example, the reporting configuration information may include an index of the reporting configuration information. For another example, the reporting configuration information may include a bitmap. The bitmap includes one or more bits, and each bit is associated with one piece of reporting configuration information. A value of the bit may be set to 0, to indicate requesting to initiate a measurement reporting procedure associated with the reporting configuration information, or a value of the bit is set to 1, to indicate not triggering a measurement reporting procedure associated with the reporting configuration information. Alternatively, a value of the bit is set to 1, to indicate requesting to initiate a measurement reporting procedure associated with the reporting configuration information, or a value of the bit is set to 0, to indicate not triggering a measurement reporting procedure associated with the reporting configuration information.

For example, the bitmap includes 2 bits. It is assumed that a first bit is associated with reporting configuration information 1, and a second bit is associated with reporting configuration information 2. When a value of the first bit is 0, it indicates requesting to initiate a measurement reporting procedure associated with the reporting configuration information 1, or when a value of the first bit is 1, it indicates not initiating a measurement reporting procedure associated with the reporting configuration information 1. When a value of the second bit is 0, it indicates requesting to initiate a measurement reporting procedure associated with the reporting configuration information 2, or when a value of the second bit is 1, it indicates not initiating a measurement reporting procedure associated with the reporting configuration information 2.

(6) Resource configuration information

The resource configuration information indicates requesting to initiate a measurement reporting procedure associated with specific resource configuration information.

For example, the resource configuration information includes an index of the resource configuration information.

For another example, the resource configuration information includes a bitmap. The bitmap includes one or more bits, and each bit is associated with one piece of resource configuration information. A value of the bit may be set to 0, to indicate requesting to initiate a measurement reporting procedure associated with the resource configuration information, or a value of the bit is set to 1, to indicate not triggering a measurement reporting procedure associated with the resource configuration information. Alternatively, a value of the bit is set to 1, to indicate requesting to initiate a measurement reporting procedure associated with the resource configuration information, or a value of the bit is set to 0, to indicate not triggering a measurement reporting procedure associated with the resource configuration information.

For example, the bitmap includes 2 bits. It is assumed that a first bit is associated with resource configuration information 1, and a second bit is associated with resource configuration information 2. When a value of the first bit is 0, it indicates requesting to initiate a measurement reporting procedure associated with the resource configuration information 1, or when a value of the first bit is 1, it indicates not initiating a measurement reporting procedure associated with the resource configuration information 1. When a value of the second bit is 0, it indicates requesting to initiate a measurement reporting procedure associated with the resource configuration information 2, or when a value of the second bit is 1, it indicates not initiating a measurement reporting procedure associated with the resource configuration information 2.

(7) Resource set information

The resource set information indicates requesting to initiate a measurement reporting procedure associated with specific resource set information.

For example, the resource set information includes an index of the resource set information.

For another example, the resource set information includes a bitmap. The bitmap includes one or more bits, and each bit is associated with one piece of resource set information. A value of the bit may be set to 0, to indicate requesting to initiate a measurement reporting procedure associated with the resource set information, or a value of the bit is set to 1, to indicate not triggering a measurement reporting procedure associated with the resource set information. Alternatively, a value of the bit is set to 1, to indicate requesting to initiate a measurement reporting procedure associated with the resource set information, or a value of the bit is set to 0, to indicate not triggering a measurement reporting procedure associated with the resource set information.

For example, the bitmap includes 2 bits. It is assumed that a first bit is associated with resource set information 1, and a second bit is associated with resource set information 2. When a value of the first bit is 0, it indicates requesting to initiate a measurement reporting procedure associated with the resource set information 1, or when a value of the first bit is 1, it indicates not initiating a measurement reporting procedure associated with the resource set information 1. When a value of the second bit is 0, it indicates requesting to initiate a measurement reporting procedure associated with the resource set information 2, or when a value of the second bit is 1, it indicates not initiating a measurement reporting procedure associated with the resource set information 2.

(8) Resource information

The resource information indicates requesting to initiate a measurement reporting procedure associated with specific resource information.

For example, the resource information includes an index of the resource information.

For another example, the resource information includes a bitmap. The bitmap includes one or more bits, and each bit is associated with one piece of resource information. A value of the bit may be set to 0, to indicate requesting to initiate a measurement reporting procedure associated with the resource information, or a value of the bit is set to 1, to indicate not triggering a measurement reporting procedure associated with the resource information. Alternatively, a value of the bit is set to 1, to indicate requesting to initiate a measurement reporting procedure associated with the resource information, or a value of the bit is set to 0, to indicate not triggering a measurement reporting procedure associated with the resource information.

For example, the bitmap includes 2 bits. It is assumed that a first bit is associated with resource information 1, and a second bit is associated with resource information 2. When a value of the first bit is 0, it indicates requesting to initiate a measurement reporting procedure associated with the resource information 1, or when a value of the first bit is 1, it indicates not initiating a measurement reporting procedure associated with the resource information 1. When a value of the second bit is 0, it indicates requesting to initiate a measurement reporting procedure associated with the resource information 2, or when a value of the second bit is 1, it indicates not initiating a measurement reporting procedure associated with the resource information 2.

(9) Beam information

The beam information indicates the transmission beam used by the network device to send the measurement reference signal.

Optionally, the beam information may be an index of a quasi-co-location (quasi colocation, QCL) reference signal or an index of a TCI state. This is not limited.

For example, the terminal device may indicate one piece of beam information for one piece of resource set information, and the network device determines, based on the beam information, a transmission beam of resource information in the resource set information.

(10) Cell Index

The cell index indicates a cell associated with a measurement reporting procedure.

Based on the foregoing description of the first request information, the terminal device may send the first request information to the network device, to actively request to initiate a measurement reporting procedure.

Optionally, when sending the first request information to the network device, the terminal device may start a timer, to wait for receiving first response information from the network device. When the timer expires, if the terminal device has not received the first response information, it indicates failure of requesting to initiate a measurement reporting procedure, or it indicates that the network device rejects initiation of a measurement reporting procedure requested by the terminal device.

Optionally, the terminal device may resend same first request information before the timer expires. In this case, the counter may restart timing upon resending the first request information (or referred to as resetting the timer), to prolong a time for waiting for the first response information.

Based on the foregoing description of sending, by the terminal device, the first request information to the network device, optionally, the terminal device may further send the first request information to the network device with reference to one or more of the following four embodiments.

In a first possible embodiment, before receiving first response information associated with current first request information, the terminal device may send a same piece of first request information before the timer expires, but cannot send another piece of first request information that is different.

In a second possible embodiment, before a measurement reference signal (or referred to as a measurement resource) associated with current first request information is sent by the network device, the terminal device cannot send another piece of first request information that is different.

In a third possible embodiment, before a measurement reporting procedure associated with current first request information is completed, the terminal device cannot send another piece of first request information that is different. In a fourth possible embodiment, before a timer corresponding to current first request information expires, the terminal device cannot send next piece of first request information.

In other words, the network device receives only a single measurement request of the terminal device at a same time. S802: The network device sends first response information to the terminal device. Correspondingly, the terminal device receives the first response information from the network device.

The first response information indicates that the network device agrees to initiation of a measurement reporting procedure.

Optionally, the first response information may be carried in one or more of the following signaling: DCI signaling (for example, a DCI format 0_1 or a DCI format 0_2), MAC-CE signaling, RRC signaling, and the like. This is not limited. When receiving the first response information of the network device, the terminal device may determine, based on a preset condition, whether the received first response information is a response to the first request information. If the preset condition is met, it may be determined that the received first response information is a response to the first request information.

For example, the preset condition includes one or a combination of the following: the first response information includes first indication information, an index of a HARQ process indicated by the first response information is the same as an index of a HARQ process used for transmitting the first request information, an NDI field in the first response information is in a state of toggled, a field value of a measurement trigger indication field in the first response information is not equal to 0, a trigger state indicated by a measurement trigger indication field in the first response information is the same as a trigger state indicated by the first request information, or the first response information includes second indication information.

The combination may specifically refer to performing a logical "AND" operation, a logical "OR" operation, or a combination of the two operations on multiple conditions.

(1) The first response information includes first indication information.

The first indication information may indicate whether the first response information is a response to the first request information.

Optionally, the first indication information may further indicate a measurement reporting procedure associated with the first request information/trigger state information/the aperiodic reporting association information/the reporting configuration information/the resource configuration information/the resource set information/the resource information that is associated with the first response information.

Optionally, the first indication information may be a new field specially used to indicate that the first response information is a response to the first request information. Alternatively, an existing field having another function may be reused to indicate that the first response information is a response to the first request information. This is not limited. (2) An index of a HARQ process indicated by the first response information is the same as an index of a HARQ process used for transmitting the first request information.

The network device may set the index of the HARQ process indicated by the first response information to be the same as the index of the HARQ process used for transmitting the first request information, to implicitly indicate that the first response information is a response to the first request information.

(3) An NDI field in the first response information is in a state of toggled.

The NDI field may be 1 bit, and may indicate two states: toggled and not toggled. Toggled indicates that uplink data associated with a same HARQ process is correctly received, and not toggled indicates that uplink data associated with a same HARQ process is not correctly received. The network device may implicitly indicate that the first response information is a response to the first request information by setting the state of the NDI field to toggled.

(4) A value of a measurement trigger indication field (for example, a CSI request field) is not equal to 0.

The network device may configure, for the terminal device, 2n-1 trigger states dedicated to the measurement reporting procedure initiated by the terminal device. The network device may set the value of the measurement trigger indication field to 1 to 2n-1 to indicate the 2n-1 trigger states dedicated to the measurement reporting procedure initiated by the terminal device. In other words, the network device may implicitly indicate, by setting the value of the measurement trigger indication field to not equal to 0, that the first response information is a response to the first request information.

(5) A trigger state indicated by a measurement trigger indication field (for example, a CSI request field) is equal to a trigger state indicated by the first request information.

The network device indicates, by using the measurement trigger indication field, the trigger state indicated by the first request information, to indicate that the network device agrees to initiation of a measurement reporting procedure associated with the trigger state, that is, implicitly indicates that the first response information is a response to the first request information.

(6) The first response information includes second indication information, and values of the second indication information are not all 0s.

The second indication information indicates trigger state information, aperiodic reporting association information, reporting configuration information, resource configuration information, resource set information, or resource information that is indicated by the first request information to which the network device responds.
For example, the second indication information may be a bitmap, and the bitmap may include one or more bits. One bit in the bitmap is associated with one piece of trigger state information, aperiodic reporting association information, reporting configuration information, resource configuration information, resource set information, or resource information that is indicated by the first request information, and one bit indicates whether the network device responds to the trigger state information, the aperiodic reporting association information, the reporting configuration information, the resource configuration information, the resource set information, or the resource information that is associated with the bit.
A value of the bit may be set to 0, to indicate that the network device responds to the trigger state information, the aperiodic reporting association information, the reporting configuration information, the resource configuration information, the resource set information, or the resource information that is associated with the bit; or a value of the bit is set to 1, to indicate that the network device does not respond to the trigger state information, the aperiodic reporting association information, the reporting configuration information, the resource configuration information, the resource set information, or the resource information that is associated with the bit.
Alternatively, a value of the bit may be set to 1, to indicate that the network device responds to the trigger state information, the aperiodic reporting association information, the reporting configuration information, the resource configuration information, the resource set information, or the resource information that is associated with the bit; or a value of the bit may be set to 0, to indicate that the network device does not respond to the trigger state information, the aperiodic reporting association information, the reporting configuration information, the resource configuration information, the resource set information, or the resource information that is associated with the bit.
For example, a trigger state is used as an example. It is assumed that the trigger state information indicated by the first request information includes trigger state information 1, trigger state information 2, and trigger state information 3. The second indication information may be a bitmap including 3 bits (for example, a bit 1, a bit 2, and a bit 3), and the 3 bits may respectively correspond to the trigger state information 1, the trigger state information 2, and the trigger state information 3. The bit 1 is set to 1, to indicate that the network device responds to the trigger state information 1 indicated by the first request information, and bit 1 is set to 0, to indicate that the network device does not respond to the trigger state information 1 indicated by the first request information. The bit 2 is set to 1, to indicate that the network device responds to the trigger state information 2 indicated by the first request information, and the bit 2 is set to 0, to indicate that the network device does not respond to the trigger state information 2 indicated by the first request information. The bit 3 is set to 1, to indicate that the network device responds to the trigger state information 3 indicated by the first request information, and the bit 3 is set to 0, to indicate that the network device does not respond to the trigger state information 3 indicated by the first request information.
Optionally, when the network device sets the bits to 0s to indicate that the network device does not respond to the trigger state information/the aperiodic reporting association information/the reporting configuration information/the resource configuration information/the resource set information/the resource information that is indicated by the first request information, and the values of the second indication information are not all 0s, to indicate that the first response information is a response to the first request information.
Alternatively, when the network device sets the bits to 1s to indicate that the network device does not respond to the trigger state information/the aperiodic reporting association information/the reporting configuration information/the resource configuration information/the resource set information/the resource information that is indicated by the first request information, and the values of the second indication information are not all 1s, to indicate that the first response information is a response to the first request information.

Optionally, based on the foregoing description of the preset condition, this application provides the following six possible embodiments.

In a first possible embodiment, the preset condition may be that the first response information includes the first indication information.

For example, the first indication information may be a 1-bit field. When a value of the first indication information is equal to 1, it indicates that the first response information is a response to the first request information; or a value of the first indication information is equal to 0, it indicates that the first response information is not a response to the first request information. Alternatively, when a value of the first indication information is equal to 0, it indicates that the first response information is a response to the first request information; or a value of the first indication information is equal to 1, it indicates that the first response information is not a response to the first request information.

In a second possible embodiment, the preset condition may be that the first response information includes the first indication information and the second indication information.

For descriptions of the first indication information and the second indication information, refer to the foregoing related descriptions of the first indication information and the foregoing related descriptions of the second indication information. Details are not described again.

In a third possible embodiment, the preset condition may be that the index of the HARQ process indicated by the first response information is the same as the index of the HARQ process used for transmitting the first request information, the NDI field in the first response information is in the state of toggled, and the field value of the measurement trigger indication field in the first response information is not equal to 0.

When the foregoing three requirements are met (that is, the index of the HARQ process indicated by the first response information is the same as the index of the HARQ process used for transmitting the first request information, the NDI field in the first response information is in the state of toggled, and the field value of the measurement trigger indication field in the first response information is not equal to 0), it indicates that the first response information is a response to the first request information. If any requirement is not met, it indicates that the first response information is not a response to the first request information.

In a fourth possible embodiment, the preset condition may be that the index of the HARQ process indicated by the first response information is the same as the index of the HARQ process used for transmitting the first request information, the NDI field in the first response information is in the state of toggled, and the trigger state indicated by the measurement trigger indication field in the first response information is equal to the trigger state indicated in the first request signaling.

When the foregoing three requirements are met (that is, the index of the HARQ process indicated by the first response information is the same as the index of the HARQ process used for transmitting the first request information, the NDI field in the first response information is in the state of toggled, and the trigger state indicated by the measurement trigger indication field in the first response information is equal to the trigger state indicated in the first request signaling), it indicates that the first response information is a response to the first request information. If any requirement is not met, it indicates that the first response information is not a response to the first request information. In a fifth possible embodiment, the preset condition may be that the index of the HARQ process indicated by the first response information is the same as the index of the HARQ process used for transmitting the first request information, the NDI field in the first response information is in the state toggled, and the value of the second indication information in the first response information is not equal to 0.

When the foregoing three requirements are all met (that is, the index of the HARQ process indicated by the first response information is the same as the index of the HARQ process used for transmitting the first request information, the NDI field in the first response information is in the state of toggled, and the value of the second indication information in the first response information is not equal to 0), it indicates that the first response information is a response to the first request information. If any requirement is not met, it indicates that the first response information is not a response to the first request information.

In a sixth possible embodiment, the preset condition may be that the index of the HARQ process indicated by the first response information is the same as the index of the HARQ process used for transmitting the first request information, the NDI field of the first response information is in the state of toggled, and the trigger state information/the aperiodic reporting association information/the reporting configuration information/the resource configuration information/the resource set information/the resource information indicated by the second indication information in the first response information is the same as the trigger state information/the aperiodic reporting association information/the reporting configuration information/the resource configuration information/the resource set information/the resource information indicated by the first request information.

When the foregoing three requirements are met (that is, the index of the HARQ process indicated by the first response information is the same as the index of the HARQ process used for transmitting the first request information, the NDI field in the first response information is in the state of toggled, and the trigger state information/the aperiodic reporting association information/the reporting configuration information/the resource configuration information/the resource set information/the resource information indicated by the second indication information in the first response information is the same as the trigger state information/the aperiodic reporting association information/the reporting configuration information/the resource configuration information/the resource set information/the resource information indicated by the first request information), it indicates that the first response information is a response to the first request information. If any requirement is not met, it indicates that the first response information is not a response to the first request information.

Based on the foregoing description of the preset condition, the terminal device may determine whether the first response information is a response to the first request information.

Optionally, the first response information may trigger one or more measurement reporting procedures. The one or more measurement reporting procedures may be triggered by the network device in response to the first request information of the terminal device, or may be actively triggered by the network device. This is not limited.

S803: The network device sends a measurement reference signal after a first time offset starting from a sending moment or a receiving moment of the first response information. Correspondingly, the terminal device receives the measurement reference signal from the network device.

Optionally, the network device may determine measurement configuration information based on the first response information, and send the measurement reference signal to the terminal device based on the measurement configuration information. Correspondingly, the terminal device determines the measurement configuration information based on the first response information, and receives the measurement reference signal from the network device based on the measurement configuration information.

Optionally, the network device and the terminal device may determine, from RRC configuration information based on the first response information, the measurement configuration information associated with the first response information.

For descriptions of the RRC configuration information, refer to related descriptions of the RRC configuration information in FIG. 9. Details are not described herein again.

A specific value of the first time offset may be determined based on an actual communication scenario or an actual communication requirement.

Optionally, the first time offset may be a preset time interval, may be reported by the terminal device, or may be configured by the network device for the terminal device. This is not limited.

Optionally, when sending the measurement reference signal to the terminal device, the network device may send the measurement reference signal over a transmission beam configured by the network device, or may send the measurement reference signal over a transmission beam indicated by the terminal device.

In a first possible instance, if the one or more measurement reporting procedures are actively triggered by the network device, that is, it is determined, based on the preset condition, that the first response information is not a response to the first request information associated with the one or more measurement reporting procedures, the network device may send, over a transmission beam configured by the network device, the measurement reference signal associated with the one or more measurement reporting procedures.

In a second possible embodiment, when the one or more measurement reporting procedures are triggered by the network device in response to the first request information of the terminal device, that is, it is determined, based on the preset condition, that the first response information is a response to the first request information associated with the one or more measurement reporting procedures, if the terminal device includes beam information in the first request information, the network device may send, over a transmission beam indicated by the beam information, the measurement reference signal associated with the one or more measurement reporting procedures.

The beam information indicates the transmission beam used by the network device to send the measurement reference signal.

In a third possible embodiment, when the one or more measurement reporting procedures are triggered by the network device in response to the first request information of the terminal device, that is, it is determined, based on the preset condition, that the first response information is a response to the first request information associated with the one or more measurement reporting procedures, if the terminal device does not include beam information in the first request information, or the terminal device does not send beam information to the network device, the network device may send, over a transmission beam configured by the network device, the measurement reference signal associated with the one or the more measurement reporting procedures.

Based on the foregoing three possible embodiments, the network device may include fifth indication information in the first response information.

The fifth indication information indicates that the transmission beam used by the network device is a transmission beam indicated by the terminal device, or the fifth indication information indicates that the transmission beam used by the network device is a transmission beam configured by the network device.

Based on the method shown in FIG. 8, when a direction of a reception beam changes, the terminal device may send the first request information, to actively request to initiate a measurement reporting procedure, and quickly re-determine an optimal reception beam, improving data transmission reliability. The terminal device may further indicate a transmission beam used by the network device to send a measurement reference signal. The terminal device indicates the transmission beam to the network device, reducing a resource loss caused by sending the measurement reference signal by the network device over another transmission beam, and improving beam measurement efficiency. The terminal device may further determine, based on the first response information sent by the network device, that the sent first request information is responded to, that is, determine that the network device agrees to initiation of a measurement reporting procedure. The terminal device may determine, based on the first time offset, the moment of receiving the measurement reference signal, and quickly determine an optimal reception beam based on the received measurement reference signal, avoiding a transmission performance loss caused by using a non-optimal reception beam, and improving transmission performance.

Based on the method shown in FIG. 8, before the terminal device sends the first request information to the network device, as shown in S800 in FIG. 9, the network device may send RRC configuration information to the terminal device, and the terminal device may determine the first request information based on the RRC configuration information.

S800: The network device sends RRC configuration information to the terminal device. Correspondingly, the terminal device receives the RRC configuration information from the network device.

In a first possible design, the RRC configuration information may be used to configure one or more of the following: one or more trigger states, one or more reporting configurations, one or more pieces of aperiodic reporting association information, one or more resource configurations, one or more resource sets, or one or more resources.

Optionally, one or more reporting configurations are associated with one or more resource configurations, one resource configuration includes one or more resource sets, and one resource set includes one or more resources.

Optionally, one resource configuration may be used to specifically include a channel measurement resource, and the channel measurement resource is used for channel measurement. A resource set configured in a resource configuration used for channel measurement is a resource set used for channel measurement.

Optionally, one resource configuration may be used to specifically include an interference measurement resource, and the channel measurement resource is used for interference measurement. A resource set configured in a resource configuration used for interference measurement is a resource set used for interference measurement.

Optionally, one trigger state is associated with one or more pieces of aperiodic reporting association information. Optionally, the aperiodic reporting association information may include one or more of the following: reporting configuration index (report configuration index), resource set indication information, and QCL information.

The reporting configuration index indicates that a trigger state associated with the reporting configuration is used to trigger a measurement reporting procedure associated with a specific reporting configuration. The resource set indication information is used to select an associated resource set from a channel resource set and an interference resource set that are associated with the reporting configuration. The QCL information indicates a transmission beam of a measurement resource (the terminal device may determine, based on the information, a reception beam used when receiving and measuring the measurement resource).

Optionally, the network device may further indicate a trigger state by sending trigger signaling. Reporting configurations associated with all reporting association information indicated by the trigger state are triggered. The network device sends a measurement reference signal based on a measurement resource associated with the reporting configuration. The terminal device may measure the measurement reference signal, and adjust a reception beam.

In a second possible design, the RRC configuration information may be used to configure: a trigger state specially used for a measurement reporting procedure initiated by a terminal device, a reporting configuration specially used for a measurement reporting procedure initiated by a terminal device, aperiodic reporting association information specially used for a measurement reporting procedure initiated by a terminal device, a resource configuration specially used for a measurement reporting procedure initiated by a terminal device, a resource set specially used for a measurement reporting procedure initiated by a terminal device, or a resource specially used for a measurement reporting procedure initiated by a terminal device.

For example, the network device may configure, for the terminal device by using the RRC configuration information, 2n trigger states specially used for a measurement reporting procedure initiated by the terminal device, and the value of the measurement trigger indication field (for example, the CSI request field) in the first response information is set to 0 to 2n-1. The value of n may be configured by using RRC signaling.

For example, if the value of n is 3, the RRC configuration information may configure a maximum of eight trigger states specially used for a measurement reporting procedure initiated by the terminal device, and values of the measurement trigger indication field in the first response information are respectively 000, 001, 010, 011, 100, 101, 110 and 111.

For another example, the network device may configure, for the terminal device by using the RRC configuration information, a maximum of 2n-1 trigger states specially used for a measurement reporting procedure initiated by the terminal device, and 000 is reserved as a special indication. In this case, the value of the measurement trigger indication field (for example, the CSI request field) in the first response information is set to 1 to 2n-1. The value of n may be configured by using RRC signaling.

For example, if the value of n is 3, the RRC configuration information may configure a maximum of eight trigger states specially used for a measurement reporting procedure initiated by the terminal device, and values of the measurement trigger indication field in the first response information are respectively 001, 010, 011, 100, 101, 110 and 111.

Optionally, the RRC configuration information may include third indication information, and the third indication information indicates whether the terminal device is allowed to request to initiate a measurement reporting procedure. When the RRC configuration information includes the third indication information, the terminal device may initiate a measurement reporting procedure.

Based on the foregoing descriptions of the first possible design and the second possible design, when sending the RRC configuration information to the terminal device, the network device may send the RRC configuration information shown in the first possible design to the terminal device, or may send the RRC configuration information shown in the second possible design to the terminal device, or may send the RRC configuration information shown in the first possible design and the RRC configuration information shown in the second possible design to the terminal device. This is not limited.

Optionally, the trigger state/reporting configuration/aperiodic reporting association information/resource configuration/resource set/resource mentioned in this application may be a trigger state/reporting configuration/aperiodic reporting association information/resource configuration/resource set/resource that is specially used for a measurement reporting procedure actively initiated by the terminal device, or may be a trigger state/reporting configuration/aperiodic reporting association information/resource configuration/resource set/resource that is used for a measurement reporting procedure actively triggered by the network device. This is not limited. Optionally, before the network device sends the RRC configuration information to the terminal device, as shown in S800a in FIG. 9, the terminal device may further send terminal device capability information to the network device.

S800a: The terminal device sends terminal device capability information to the network device. Correspondingly, the network device receives the terminal device capability information from the terminal device.

For example, the terminal device capability information may include one or more of the following: fourth indication information, a quantity of measurement reporting procedures that can be requested by the terminal device, a quantity of reporting configurations that can be requested by the terminal device, a quantity of trigger states that can be requested by the terminal device, a quantity of resource configurations that can be requested by the terminal device, a quantity of resource sets that can be requested by the terminal device, or a quantity of resources that can be requested by the terminal device.

The fourth indication information indicates whether the terminal device supports requesting to initiate a measurement reporting procedure by the terminal device.

Optionally, the measurement reporting procedure may also be referred to as a reporting configuration, and one reporting configuration corresponds to one measurement reporting procedure.

Optionally, one trigger state may be associated with one or more reporting configurations.

Optionally, after the network device sends the measurement reference signal to the terminal device, as shown in S804 in FIG. 9, the terminal device may further send a measurement result to the network device.

S804: The terminal device sends a measurement result to the network device after a second time offset starting from the sending moment or the receiving moment of the first response information. Correspondingly, the network device receives the measurement result from the terminal device.

The second time offset is greater than the first time offset, and a specific value of the second time offset may be determined based on an actual communication scenario or an actual communication requirement.

Optionally, the second time offset may be a preset time interval, may be reported by the terminal device, or may be configured by the network device for the terminal device. This is not limited.

Optionally, after receiving the measurement reference signal, the terminal device may measure the measurement reference signal based on the measurement configuration information associated with the first response information, to obtain the measurement result.

Optionally, when a measurement report needs to be reported in the measurement reporting procedure, the terminal device may send the measurement result to the network device after the second time offset starting from the receiving moment of the first response information.

Optionally, when a measurement report does not need to be reported in the measurement reporting procedure (for example, the measurement reporting configuration of the measurement reporting procedure is "none"), the terminal device may not send the measurement result to the network device.

It should be noted that embodiments of this application may be implemented separately, or may be implemented in combination. This is not limited. Unless otherwise stated or there is a logic conflict, terms and/or descriptions in different embodiments provided by this application are consistent and may be mutually referenced, and technical features in different embodiments may be combined into a new embodiment based on an internal logical relationship thereof.

It may be understood that an execution body may perform some or all of the steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

The foregoing mainly describes the solutions provided in this application from the perspective of interaction between devices. Correspondingly, this application further provides a communication apparatus. The communication apparatus is configured to implement the foregoing methods. The communication apparatus may be the terminal device in the foregoing method embodiment, an apparatus including the foregoing terminal device, or a component that may be used in the terminal device. Alternatively, the communication apparatus may be the network device in the foregoing method embodiment, an apparatus including the foregoing network device, or a component that may be used in the network device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. In actual implementation, another division manner may be used.

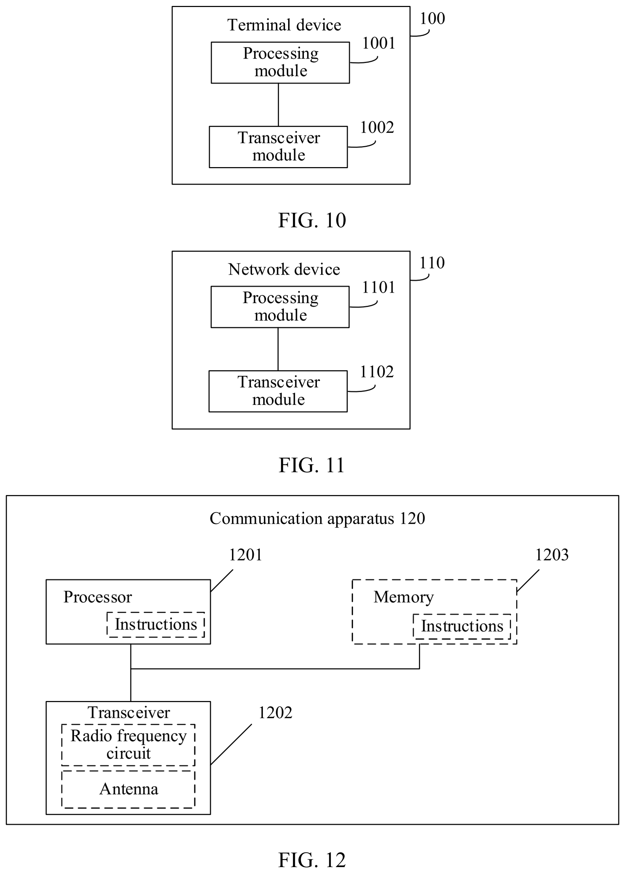

In an implementation scenario, an example in which the communication apparatus is the terminal device in the foregoing method embodiment is used. FIG. 10 is a diagram of a structure of a terminal device 100. The terminal device 100 includes a processing module 1001 and a transceiver module 1002.

In some embodiments, the terminal device 100 may further include a storage module (not shown in FIG. 10), configured to store program instructions and data.

In some embodiments, the transceiver module 1002 may also be referred to as a transceiver unit, and is configured to implement a sending function and/or a receiving function. The transceiver module 1002 may include a transceiver circuit, a transceiver machine, a transceiver, or a communication interface.

In some embodiments, the transceiver module 1002 may include a receiving module and a sending module that are respectively configured to perform the receiving and sending steps performed by the terminal device in the foregoing method embodiments, and/or configured to support another process of the technology described in this specification. The processing module 1001 may be configured to perform the processing (for example, determining or generation) steps performed by the terminal device in the foregoing method embodiments, and/or configured to support another process of the technology described in this specification.

For example, the transceiver module 1002 is configured to: send first request information to a network device; receive first response information from the network device; and receive a measurement reference signal from the network device after a first time offset starting from a sending moment or a receiving moment of the first response information. The first request information is for requesting to initiate a measurement reporting procedure, and the first response information indicates that the network device agrees to initiation of a measurement reporting procedure.

In a possible implementation, the first request information includes one or more of the following: identification information of the first request information, event information, trigger state information, aperiodic reporting association information, reporting configuration information, resource configuration information, resource set information, resource information, beam information, or cell information. The event information indicates one or more of the following events: terminal device rotating, terminal device moving, terminal device rotating and moving, terminal device rotating and not moving, terminal device moving and not rotating, beam quality deteriorating, or beam quality of a current beam being less than beam quality of a candidate beam; the beam information indicates a transmission beam used by the network device to send the measurement reference signal; and the cell information indicates a cell associated with the measurement reporting procedure.

In a possible implementation, the processing module 1001 is further configured to: when the first response information meets a preset condition, determine that the first response information is a response to the first request information. The preset condition includes one or a combination of the following: the first response information includes first indication information; an index of a HARQ process indicated by the first response information is the same as an index of a HARQ process used for transmitting the first request information; an NDI field in the first response information is in a state of toggled; a field value of a measurement trigger indication field in the first response information is not equal to 0; a trigger state indicated by a measurement trigger indication field in the first response information is the same as a trigger state indicated by the first request information; or the first response information includes second indication information. The first indication information indicates that the first response information is a response to the first request information, and the second indication information indicates trigger state information, aperiodic reporting association information, or reporting configuration information that is indicated by the first request information to which the network device responds.

In a possible implementation, the preset condition is that the index of the HARQ process indicated by the first response information is the same as the index of the HARQ process used for transmitting the first request information.

In a possible implementation, the preset condition is that the index of the HARQ process indicated by the first response information is the same as the index of the HARQ process used for transmitting the first request information, the NDI field in the first response information is in the state of toggled, and the field value of the measurement trigger indication field in the first response information is not equal to 0.

In a possible implementation, the preset condition is that the index of the HARQ process indicated by the first response information is the same as the index of the HARQ process used for transmitting the first request information, the NDI field in the first response information is in the state of toggled, and the trigger state indicated by the measurement trigger indication field in the first response information is equal to the trigger state indicated in the first request signaling.

In a possible implementation, the second indication information is a bitmap, one bit in the bitmap corresponds to one piece of trigger state information, aperiodic reporting association information, or reporting configuration information that is indicated by the first request information, and the bit indicates whether the network device responds to the trigger state information, the aperiodic reporting association information, or the reporting configuration information associated with the bit.

In a possible implementation, before sending the first request information, the transceiver module 1002 is further configured to receive RRC configuration information.

In a possible implementation, the RRC configuration information is used to configure one or more of the following: a trigger state specially used for a measurement reporting procedure initiated by a terminal device, a reporting configuration specially used for a measurement reporting procedure initiated by a terminal device, aperiodic reporting association information specially used for a measurement reporting procedure initiated by a terminal device, a resource configuration specially used for a measurement reporting procedure initiated by a terminal device, a resource set specially used for a measurement reporting procedure initiated by a terminal device, or a resource specially used for a measurement reporting procedure initiated by a terminal device.

In a possible implementation, the RRC configuration information further includes third indication information, and the third indication information indicates whether the terminal device is allowed to request to initiate the measurement reporting procedure.

In a possible implementation, the processing module 1001 is further configured to determine, from the RRC configuration information based on the first response information, measurement configuration information associated with the first response information. The transceiver module 1002 is further configured to receive the measurement reference signal from the network device based on the measurement configuration information associated with the first response information.

In a possible implementation, the transceiver module 1002 is further configured to send terminal device capability information to the network device. The terminal device capability information includes one or more of the following: fourth indication information, a quantity of measurement reporting procedures that can be requested by the terminal device, a quantity of reporting configurations that can be requested by the terminal device, a quantity of trigger states that can be requested by the terminal device, a quantity of resource configurations that can be requested by the terminal device, a quantity of resource sets that can be requested by the terminal device, or a quantity of resources that can be requested by the terminal device. The fourth indication information indicates whether the terminal device supports requesting to initiate a measurement reporting procedure by the terminal device.

In a possible implementation, the processing module 1001 is further configured to measure the measurement reference signal from the network device, and determine a measurement result. The transceiver module 1002 is further configured to send the measurement result to the network device after a second time offset starting from the sending moment or the receiving moment of the first response information.

In this application, the terminal device 100 is presented in a form of functional modules obtained through division in an integrated manner. The "module" herein may be an ASIC, a circuit, a processor and a memory that execute one or more software or firmware programs, an integrated logic circuit, and/or another component that can provide the foregoing functions.

In some embodiments, in hardware implementation, a person skilled in the art may figure out that the terminal device 100 may be in a form of the communication apparatus 70 shown in FIG. 7.

In an example, a function/implementation process of the processing module 1001 in FIG. 10 may be implemented by the processor 701 in the communication apparatus 70 shown in FIG. 7 by invoking computer-executable instructions stored in the memory 703. A function/implementation process of the transceiver module 1002 in FIG. 10 may be implemented by the communication interface 704 in the communication apparatus 70 shown in FIG. 7.

In some embodiments, when the terminal device 100 in FIG. 10 is a chip or a chip system, the function/implementation process of the transceiver module 1002 may be implemented by an input/output interface (or a communication interface) of the chip or the chip system, and the function/implementation process of the processing module 1001 may be implemented by a processor (or a processing circuit) of the chip or the chip system.

Because the terminal device 100 provided in this embodiment may perform the foregoing method, for technical effects that can be obtained, refer to the foregoing method embodiment. Details are not described herein again.

In an implementation scenario, an example in which the communication apparatus is the network device in the foregoing method embodiment is used. FIG. 11 is a diagram of a structure of a network device 110. The network device 110 includes a processing module 1101 and a transceiver module 1102.

In some embodiments, the network device 110 may further include a storage module (not shown in FIG. 11), configured to store program instructions and data.

In some embodiments, the transceiver module 1102 may also be referred to as a transceiver unit, and is configured to implement a sending function and/or a receiving function. The transceiver module 1102 may include a transceiver circuit, a transceiver machine, a transceiver, or a communication interface.

In some embodiments, the transceiver module 1102 may include a receiving module and a sending module that are respectively configured to perform the receiving and sending steps performed by the network device in the foregoing method embodiments, and/or configured to support another process of the technology described in this specification. The processing module 1101 may be configured to perform the processing (for example, determining or generation) steps performed by the network device in the foregoing method embodiments, and/or configured to support another process of the technology described in this specification.

For example, the transceiver module 1102 is configured to: receive first request information from a terminal device, where the first request information is used for requesting to initiate a measurement reporting procedure; send first response information to the terminal device; and receive a measurement reference signal from the network device after a first time offset from a sending moment or a receiving moment of the first response information. The first response information indicates that the network device agrees to initiation of a measurement reporting procedure.

In a possible implementation, the first request information includes one or more of the following: identification information of the first request information, event information, trigger state information, aperiodic reporting association information, reporting configuration information, resource configuration information, resource set information, resource information, beam information, or cell information. The event information indicates one or more of the following events: terminal device rotating, terminal device moving, terminal device rotating and moving, terminal device rotating and not moving, terminal device moving and not rotating, beam quality deteriorating, or beam quality of a current beam being less than beam quality of a candidate beam; the beam information indicates a transmission beam used by the network device to send the measurement reference signal; and the cell information indicates a cell associated with the measurement reporting procedure.

In a possible implementation, the first response information includes one or a combination of the following: first indication information (the first indication information indicates that the first response information is a response to the first request information), an index of a HARQ process, an NDI field, a measurement trigger indication field, or second indication information (the second indication information indicates trigger state information, aperiodic reporting association information, or reporting configuration information that is indicated by the first request information to which the network device responds). The index of the HARQ process is the same as an index of a HARQ process used for transmitting the first request information; the NDI field is in a state of toggled; a field value of the measurement trigger indication field is not equal to 0; and a trigger state indicated by the measurement trigger indication field is the same as a trigger state indicated in the first request information.

In a possible implementation, the first response information includes the index of the HARQ process.

In a possible implementation, the first response information includes the index of the HARQ process, the NDI field, and the measurement trigger indication field, where the field value of the measurement trigger indication field is not equal to 0.

In a possible implementation, the first response information includes the index of the HARQ process, the NDI field, and the measurement trigger indication field, where the trigger state indicated by the measurement trigger indication field in the first response information is equal to the trigger state indicated in the first request signaling.

In a possible implementation, the second indication information is a bitmap, one bit in the bitmap corresponds to one piece of trigger state information, aperiodic reporting association information, or reporting configuration information that is indicated by the first request information, and the bit indicates whether the network device responds to the trigger state information, the aperiodic reporting association information, or the reporting configuration information corresponding to the bit.

In a possible implementation, before receiving the first request information, the transceiver module 1102 is further configured to send RRC configuration information to the terminal device.

In a possible implementation, the RRC configuration information is used to configure one or more of the following: a trigger state specially used for a measurement reporting procedure initiated by a terminal device, a reporting configuration specially used for a measurement reporting procedure initiated by a terminal device, aperiodic reporting association information specially used for a measurement reporting procedure initiated by a terminal device, a resource configuration specially used for a measurement reporting procedure initiated by a terminal device, a resource set specially used for a measurement reporting procedure initiated by a terminal device, or a resource specially used for a measurement reporting procedure initiated by a terminal device.

In a possible implementation, the RRC configuration information further includes third indication information, and the third indication information indicates whether the terminal device is allowed to request to initiate the measurement reporting procedure.

In a possible implementation, the processing module 1101 is further configured to determine, from the RRC configuration information based on the first response information, measurement configuration information associated with the first response information. The transceiver module 1102 is further configured to send the measurement reference signal to the terminal device based on the measurement configuration information associated with the first response information.

In a possible implementation, the transceiver module 1102 is further configured to receive terminal device capability information sent by the terminal device. The terminal device capability information includes one or more of the following: fourth indication information, a quantity of measurement reporting procedures that can be requested by the terminal device, a quantity of reporting configurations that can be requested by the terminal device, a quantity of trigger states that can be requested by the terminal device, a quantity of resource configurations that can be requested by the terminal device, a quantity of resource sets that can be requested by the terminal device, or a quantity of resources that can be requested by the terminal device. The fourth indication information indicates whether the terminal device supports requesting to initiate a measurement reporting procedure by the terminal device.

In a possible implementation, the transceiver module 1102 is further configured to receive beam information in the first request information from the terminal device, the processing module 1101 is further configured to determine a transmission beam based on the beam information, and the transceiver module 1102 is further configured to send the measurement reference signal to the terminal device over the transmission beam. The beam information indicates the transmission beam used by the network device to send the measurement reference signal.

In this application, the network device 110 is presented in a form of functional modules obtained through division in an integrated manner. The "module" herein may be an ASIC, a circuit, a processor and a memory that execute one or more software or firmware programs, an integrated logic circuit, and/or another component that can provide the foregoing functions.

In some embodiments, in hardware implementation, a person skilled in the art may figure out that the network device 110 may be in a form of the communication apparatus 70 shown in FIG. 7.

In an example, a function/implementation process of the processing module 1101 in FIG. 11 may be implemented by the processor 701 in the communication apparatus 70 shown in FIG. 7 by invoking computer-executable instructions stored in the memory 703. A function/implementation process of the transceiver module 1102 in FIG. 11 may be implemented by the communication interface 704 in the communication apparatus 70 shown in FIG. 7.

In some embodiments, when the network device 110 in FIG. 11 is a chip or a chip system, the function/implementation process of the transceiver module 1102 may be implemented by an input/output interface (or a communication interface) of the chip or the chip system, and the function/implementation process of the processing module 1101 may be implemented by a processor (or a processing circuit) of the chip or the chip system.

Because the network device 110 provided in this embodiment may perform the foregoing method, for technical effects that can be obtained, refer to the foregoing method embodiment. Details are not described herein again.

In a possible product form, the terminal device or the network device in embodiments of this application may be implemented by using one or more field programmable gate arrays (field programmable gate array, FPGA), a programmable logic device (programmable logic device, PLD), a controller, a state machine, a gate logic, a discrete hardware component, any other appropriate circuit, or any combination of circuits that can perform various functions described in this application.

In another possible product form, the terminal device or the network device in embodiments of this application may be implemented by using a general bus architecture. For ease of description, FIG. 12 is a diagram of a structure of a communication apparatus 120 according to an embodiment of this application. The communication apparatus 120 includes a processor 1201 and a transceiver 1202. The communication apparatus 120 may be a terminal device, or a chip or a module in the terminal device; or the communication apparatus 120 may be a network device, or a chip or a module in the network device. FIG. 12 shows only main components of the communication apparatus 120. In addition to a processor 1201 and a transceiver 1202, the communication apparatus may further include a memory 1203.

Optionally, the processor 1201 is mainly configured to: process a communication protocol and communication data, control the entire communication apparatus, execute a software program, and process data of the software program. The memory 1203 is mainly configured to store the software program and data. The transceiver 1202 may include a radio frequency circuit and an antenna. The radio frequency circuit is mainly configured to: perform conversion between a baseband signal and a radio frequency signal, and process a radio frequency signal. The antenna is mainly configured to receive and send a radio frequency signal in a form of an electromagnetic wave.

Optionally, the processor 1201, the transceiver 1202, and the memory 1203 may be connected through a communication bus.

After the communication apparatus is powered on, the processor 1201 may read the software program in the memory 1203, interpret and execute instructions of the software program, and process data of the software program. When data needs to be sent wirelessly, the processor 1201 performs baseband processing on the to-be-sent data, and then outputs a baseband signal to a radio frequency circuit. The radio frequency circuit performs radio frequency processing on the baseband signal, and then sends out a radio frequency signal through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1201. The processor 1201 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, an embodiment of this application further provides a communication apparatus. The communication apparatus includes a processor, configured to implement the method in any foregoing method embodiment. The communication apparatus may be the terminal device or the network device in the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor. In still another possible implementation, the communication apparatus further includes a communication interface, and the communication interface is configured to communicate with a module other than the communication apparatus. It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores computer programs or instructions. When the computer programs or instructions are executed by a computer, functions in any foregoing method embodiment are implemented.

This application further provides a computer program product. When the computer program product is executed by a computer, functions of any foregoing method embodiment are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division and may be other division during actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate parts may be physically separated or not, this is, may be located in a same place or distributed on multiple network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures (or functions) described in embodiments of this application are implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a good effect.

Although this application is described with reference to specific features and embodiments thereof, it is clear that various modifications and combinations may be made to them without departing from the protection scope of this application. Correspondingly, the specification and accompanying drawings are merely example description of this application defined by the accompanying claims, and are considered to have covered any of or all modifications, variations, combinations or equivalents within the scope of this application. It is clear that a person skilled in the art can make various modifications and variations to this application without departing from the scope of this application. This application is intended to cover these modifications and variations of this application provided that they fall within the scope of the claims of this application and their equivalent technologies.

**Claims**

1. A beam measurement method, comprising:

   sending first request information to a network device, wherein the first request information is for requesting to initiate a measurement reporting procedure;
   receiving first response information from the network device, wherein the first response information indicates that the network device agrees to initiation of a measurement reporting procedure; and
   receiving a measurement reference signal from the network device after a first time offset starting from a sending moment or a receiving moment of the first response information.

2. The method according to claim 1, wherein

   the first request information comprises one or more of the following: identification information of the first request information, event information, trigger state information, aperiodic reporting association information, reporting configuration information, resource configuration information, resource set information, resource information, beam information, or cell information, wherein
   the event information indicates one or more of the following events: terminal device rotating, terminal device moving, terminal device rotating and moving, terminal device rotating and not moving, terminal device moving and not rotating, beam quality deteriorating, or beam quality of a current beam being less than beam quality of a candidate beam; the beam information indicates a transmission beam used by the network device to send the measurement reference signal; and the cell information indicates a cell associated with the measurement reporting procedure.

3. The method according to claim 1 or 2, wherein

   when the first response information meets a preset condition, it is determined that the first response information is a response to the first request information, wherein
   the preset condition comprises one or a combination of the following:

   the first response information comprises first indication information;
   an index of a hybrid automatic repeat request HARQ process indicated by the first response information is the same as an index of a HARQ process used for transmitting the first request information;
   a new data indicator NDI field in the first response information is in a state of toggled;
   a field value of a measurement trigger indication field in the first response information is not equal to 0;
   a trigger state indicated by a measurement trigger indication field in the first response information is the same as a trigger state indicated by the first request information; or
   the first response information comprises second indication information, wherein
   the first indication information indicates that the first response information is a response to the first request information, and the second indication information indicates trigger state information, aperiodic reporting association information, or reporting configuration information that is indicated by the first request information to which the network device responds.

4. The method according to claim 3, wherein
   the preset condition is that the index of the HARQ process indicated by the first response information is the same as the index of the HARQ process used for transmitting the first request information.

5. The method according to claim 3, wherein
   the preset condition is that the index of the HARQ process indicated by the first response information is the same as the index of the HARQ process used for transmitting the first request information, the NDI field in the first response information is in the state of toggled, and the field value of the measurement trigger indication field in the first response information is not equal to 0.

6. The method according to claim 3, wherein
   the second indication information is a bitmap, one bit in the bitmap is associated with one piece of trigger state information, aperiodic reporting association information, or reporting configuration information that is indicated by the first request information, and the bit indicates whether the network device responds to the trigger state information, the aperiodic reporting association information, or the reporting configuration information that is associated with the bit.

7. The method according to any one of claims 1 to 6, wherein before the sending the first request information, the method further comprises:
   receiving radio resource control RRC configuration information from the network device.

8. The method according to claim 7, wherein
   the RRC configuration information is used to configure one or more of the following: a trigger state specially used for a measurement reporting procedure initiated by a terminal device, a reporting configuration specially used for a measurement reporting procedure initiated by a terminal device, aperiodic reporting association information specially used for a measurement reporting procedure initiated by a terminal device, a resource configuration specially used for a measurement reporting procedure initiated by a terminal device, a resource set specially used for a measurement reporting procedure initiated by a terminal device, or a resource specially used for a measurement reporting procedure initiated by a terminal device.

9. The method according to claim 8, wherein
   the RRC configuration information further comprises third indication information, and the third indication information indicates whether the terminal device is allowed to request to initiate the measurement reporting procedure.

10. The method according to any one of claims 1 to 9, wherein receiving the measurement reference signal from the network device comprises:

    determining, from the RRC configuration information based on the first response information, measurement configuration information associated with the first response information; and
    receiving the measurement reference signal from the network device based on the measurement configuration information associated with the first response information.

11. The method according to any one of claims 1 to 10, wherein the method further comprises:

sending terminal device capability information to the network device, wherein the terminal device capability information comprises one or more of the following: fourth indication information, a quantity of measurement reporting procedures that can be requested by the terminal device, a quantity of reporting configurations that can be requested by the terminal device, a quantity of trigger states that can be requested by the terminal device, a quantity of resource configurations that can be requested by the terminal device, a quantity of resource sets that can be requested by the terminal device, or a quantity of resources that can be requested by the terminal device, wherein

the fourth indication information indicates whether the terminal device supports requesting to initiate a measurement reporting procedure by the terminal device.

12. The method according to any one of claims 1 to 11, wherein the method further comprises:

measuring the measurement reference signal, and determining a measurement result; and
sending the measurement result to the network device.

13. The method according to claim 12, wherein sending the measurement result to the network device comprises:
sending the measurement result to the network device after a second time offset starting from the sending moment or the receiving moment of the first response information.

14. A beam measurement method, comprising:

receiving first request information from a terminal device, wherein the first request information is for requesting to initiate a measurement reporting procedure;
sending first response information to the terminal device, wherein the first response information indicates that a network device agrees to initiation of a measurement reporting procedure; and
sending a measurement reference signal to the terminal device after a first time offset starting from a sending moment or a receiving moment of the first response information.

15. The method according to claim 14, wherein

the first request information comprises one or more of the following: identification information of the first request information, event information, trigger state information, aperiodic reporting association information, reporting configuration information, resource configuration information, resource set information, resource information, beam information, or cell information, wherein

the event information indicates one or more of the following events: terminal device rotating, terminal device moving, terminal device rotating and moving, terminal device rotating and not moving, terminal device moving and not rotating, beam quality deteriorating, or beam quality of a current beam being less than beam quality of a candidate beam; the beam information indicates a transmission beam used by the network device to send the measurement reference signal; and the cell information indicates a cell associated with the measurement reporting procedure.

16. The method according to claim 14 or 15, wherein

the first response information comprises one or a combination of the following: first indication information, an index of a hybrid automatic repeat request HARQ process, a new data indicator NDI field, a measurement trigger indication field, or second indication information;

the index of the HARQ process is the same as an index of a HARQ process used for transmitting the first request information;

the NDI field is in a state of toggled;

a field value of the measurement trigger indication field is not equal to 0;

a trigger state indicated by the measurement trigger indication field is the same as a trigger state indicated by the first request information; and

the first indication information indicates that the first response information is a response to the first request information, and the second indication information indicates trigger state information, aperiodic reporting association information, or reporting configuration information that is indicated by the first request information to which the network device responds.

17. The method according to claim 16, wherein
the first response information comprises the index of the HARQ process.

18. The method according to claim 16, wherein

the first response information comprises the index of the HARQ process, the NDI field, and the measurement trigger indication field; and
the field value of the measurement trigger indication field is not equal to 0.

19. The method according to claim 16, wherein
the second indication information is a bitmap, one bit in the bitmap corresponds to one piece of trigger state information, aperiodic reporting association information, or reporting configuration information that is indicated by the first request information, and the bit indicates whether the network device responds to the trigger state information, the aperiodic reporting association information, or the reporting configuration information that corresponds to the bit.

20. The method according to any one of claims 14 to 19, wherein before the receiving the first request information, the method further comprises:
sending radio resource control RRC configuration information to the terminal device.

21. The method according to claim 20, wherein
the RRC configuration information is used to configure one or more of the following: a trigger state specially used for a measurement reporting procedure initiated by a terminal device, a reporting configuration specially used for a measurement reporting procedure initiated by a terminal device, aperiodic reporting association information specially used for a measurement reporting procedure initiated by a terminal device, a resource configuration specially used for a measurement reporting procedure initiated by a terminal device, a resource set specially used for a measurement reporting procedure initiated by a terminal device, or a resource specially used for a measurement reporting procedure initiated by a terminal device.

22. The method according to claim 21, wherein
the RRC configuration information further comprises third indication information, and the third indication information indicates whether the terminal device is allowed to request to initiate the measurement reporting procedure.

23. The method according to any one of claims 14 to 22, wherein the method further comprises:

determining, from the RRC configuration information based on the first response information, measurement configuration information associated with the first response information; and
sending the measurement reference signal to the terminal device based on the measurement configuration information associated with the first response information.

24. The method according to any one of claims 14 to 23, wherein the method further comprises:

receiving terminal device capability information sent by the terminal device, wherein the terminal device capability information comprises one or more of the following: fourth indication information, a quantity of measurement reporting procedures that can be requested by the terminal device, a quantity of reporting configurations that can be requested by the terminal device, a quantity of resource configurations that can be requested by the terminal device, a quantity of resource sets that can be requested by the terminal device, or a quantity of resources that can be requested by the terminal device, wherein
the fourth indication information indicates whether the terminal device supports requesting to initiate a measurement reporting procedure by the terminal device.

25. The method according to any one of claims 14 to 24, wherein the first request information comprises beam information, the beam information indicates a transmission beam used by the network device to send the measurement reference signal, and the method further comprises:

determining a transmission beam based on the beam information; and

sending the measurement reference signal to the terminal device over the transmission beam.

26. A communication apparatus, comprising:

a transceiver module, configured to send first request information to a network device, wherein the first request information is for requesting to initiate a measurement reporting procedure;
the transceiver module is further configured to receive first response information from the network device, wherein the first response information indicates that the network device agrees to initiation of a measurement reporting procedure; and
the transceiver module is further configured to receive a measurement reference signal from the network device after a first time offset starting from a sending moment or a receiving moment of the first response information.

27. A communication apparatus, comprising:

a transceiver module, configured to receive first request information from a terminal device, wherein the first request information is for requesting to initiate a measurement reporting procedure;
the transceiver module is further configured to send first response information to the terminal device, wherein the first response information indicates that a network device agrees to initiation of a measurement reporting procedure; and
the transceiver module is further configured to send a measurement reference signal to the terminal device after a first time offset starting from a sending moment or a receiving moment of the first response information.

28. A communication apparatus, wherein the communication apparatus comprises a processor, and the processor is configured to run a computer program or instructions, or is configured to use a logic circuit, to cause the communication apparatus to perform the beam measurement method according to any one of claims 1 to 13, or cause the communication apparatus to perform the beam measurement method according to any one of claims 14 to 25.

29. A computer-readable storage medium, wherein the computer-readable storage medium stores computer instructions or a program, and when the computer instructions or the program runs on a computer, the communication apparatus is caused to perform the beam measurement method according to any one of claims 1 to 13, or the beam measurement method according to any one of claims 14 to 25.

30. A computer program product, wherein the computer program product comprises computer instructions; and when a part or all of the computer instructions are run, the beam measurement method according to any one of claims 1 to 13 or the beam measurement method according to any one of claims 14 to 25 is performed.

| Network device | | Terminal device |
|---|---|---|

S101: Send measurement
configuration information

S102: Send a downlink signal on a
resource element configured by using
resource configuration information

S103: Measure the downlink
signal based on the measurement
configuration information

S104: Send a measurement result

FIG. 1

Network
device

Terminal
device

...

FIG. 2

| Network device | Terminal device |
|---|---|

S301: Send SRS configuration information

S302: Send an SRS signal

S303: Measure the SRS
signal

FIG. 3

FIG. 4

FIG. 5

FIG. 6

70

Processor 701

CPU0

CPU1

Processor 707

CPU0

CPU1

Communication bus 702

Memory 703

Communication interface 704

Output device 705

Input device 706

FIG. 7

| Terminal device | | Network device |
|---|---|---|

S801: Send first request information

S802: Send first response information

S803: Send a measurement reference signal after a first time offset starting from a sending moment or a receiving moment of the first response information

FIG. 8

| Network device | | Terminal device |
|---|---|---|

S800a: Send terminal device capability information

S800: Send RRC configuration information

S801: Send first request information

S802: Send first response information

S803: Send a measurement reference signal after a first time offset starting from a sending moment or a receiving moment of the first response information

S804: Send a measurement result after a second time offset starting from the sending moment or the receiving moment of the first response information

FIG. 9

Terminal device 100

Processing module 1001

Transceiver module 1002

FIG. 10

Network device 110

Processing module 1101

Transceiver module 1102

FIG. 11

Communication apparatus 120

Processor 1201

Instructions

Memory 1203

Instructions

Transceiver 1202

Radio frequency circuit

Antenna

FIG. 12

## INTERNATIONAL SEARCH REPORT

| International application No. |
|---|
| **PCT/CN2024/095780** |

| A. | CLASSIFICATION OF SUBJECT MATTER |
|---|---|

H04W24/10(2009.01)i; H04W72/04(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, VEN: 请求, 波束, 测量, 终端, 旋转, 移动, 衰退, 质量, 时间, 时刻, 偏移, 参考信号, request, beam, measur+, UE, rotat+, mov+, RSRP, time, offset, SRS, DMRS, TRS, CSI-RS

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 10958325 B1 (LG ELECTRONICS INC.) 23 March 2021 (2021-03-23) description, paragraphs 62-87 | 1-2, 7, 10, 12-15, 20, 23, 25-30 |
| A | US 2022131676 A1 (APPLE INC.) 28 April 2022 (2022-04-28) entire document | 1-30 |
| A | WO 2022028562 A1 (HUAWEI TECHNOLOGIES CO., LTD.) 10 February 2022 (2022-02-10) entire document | 1-30 |
| A | WO 2022160302 A1 (HUAWEI TECHNOLOGIES CO., LTD.) 04 August 2022 (2022-08-04) entire document | 1-30 |
| A | CN 115244961 A (HUAWEI TECHNOLOGIES CO., LTD.) 25 October 2022 (2022-10-25) entire document | 1-30 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 July 2024** | **31 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/095780**

| Patent document cited in search report | | | Publication date (day/month/year) | Patent family member(s) | | | Publication date (day/month/year) |
|---|---|---|---|---|---|---|---|
| US | 10958325 | B1 | 23 March 2021 | KR | 20210046370 | A | 28 April 2021 |
| US | 2022131676 | A1 | 28 April 2022 | WO | 2020168186 | A1 | 20 August 2020 |
| | | | | IN | 202117038571 | A | 10 December 2021 |
| | | | | CN | 113412600 | A | 17 September 2021 |
| WO | 2022028562 | A1 | 10 February 2022 | CN | 114071535 | A | 18 February 2022 |
| WO | 2022160302 | A1 | 04 August 2022 | | None | | |
| CN | 115244961 | A | 25 October 2022 | WO | 2021179316 | A1 | 16 September 2021 |
| | | | | CN | 115244961 | B | 05 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310643844